# EUROPEAN PATENT APPLICATION

(11) **EP 4 629 576 A1**
(43) Date of publication of application: **08.10.2025**
(21) Application number: 22969875.8
(22) Date of filing: 30.12.2022
(51) Int. Cl.: H04L 27/00

(54) **DRIVING PARAMETER ALLOCATION METHOD, AND DEVICE**

(71) Applicant: Shenzhen Yinwang Intelligent Technologies Co., Ltd., Shenzhen, Guangdong 518110 (CN)
(72) Inventor: ZHANG, Mingming, Shenzhen, Guangdong 518129 (CN); HE, Lang, Shenzhen, Guangdong 518129 (CN); ZHOU, Yongyou, Shenzhen, Guangdong 518129 (CN); LIU, Donghao, Shenzhen, Guangdong 518129 (CN)
(74) Representative: Pfenning, Meinig & Partner mbB
(86) International application number: PCT/CN2022/144321
(87) International publication number: WO 2024/138735

(57) **Abstract**

A travel parameter allocation method and a device are disclosed. The allocation method includes: obtaining a travel parameter, determining a current driving scenario, and sending the travel parameter to a motor (103) or a vehicle control apparatus (102) based on the current driving scenario. The current driving scenario includes an intelligent driving scenario, an intelligent driving low-speed scenario, an intelligent driving non-low-speed scenario, a manual driving normal scenario, or a manual driving fault scenario.

## Description

### TECHNICAL FIELD

This application relates to the field of intelligent driving, and in particular, to a travel parameter allocation method and a device.

### BACKGROUND

With continuous development of computer technologies and Internet technologies, intelligent driving gradually enters people's lives, making it possible to drive vehicles not only in a manual driving mode but also in an intelligent driving mode. The intelligent driving mode includes an autonomous driving (also referred to as unmanned driving) mode, an assisted driving mode, or the like. In the autonomous driving mode, an intelligent driving apparatus in a vehicle can operate the vehicle to safely travel without participation of a driver in a travelling process of the vehicle. In the assisted driving mode, the intelligent driving apparatus in the vehicle assists the driver in safe travelling in the travelling process of the vehicle.

Currently, if the vehicle is driven in the intelligent driving mode, the intelligent driving apparatus can calculate torque information, and send the torque information to a vehicle control apparatus. After receiving the torque information, the vehicle control apparatus can directly send the torque information to a motor, or further process the received torque information, and send the processed torque information to the motor, so that the motor can perform a corresponding operation based on the received torque information. If the vehicle is driven in the manual driving mode, the vehicle control apparatus can calculate torque information, and send the torque information to the motor. After receiving the torque information, the motor performs a corresponding operation based on the torque information. In the foregoing process, a working mode between the intelligent driving apparatus, the vehicle control apparatus, and the motor is simple, and is not applicable to an increasingly complex driving environment.

### SUMMARY

Embodiments of this application provide a travel parameter allocation method and a device, so that a travel parameter may be allocated based on a current driving scenario, and the travel parameter is allocated to an apparatus suitable for the current driving scenario.

To achieve the foregoing objectives, the following technical solutions are used in embodiments of this application.

According to a first aspect, a travel parameter allocation method is provided. The method may be performed by an intelligent control apparatus, or may be performed by a module used in the intelligent control apparatus, for example, a chip, a chip system, or a circuit, or may be implemented by a logical module or software that can implement all or a part of functions of the intelligent control apparatus. This is not limited. For ease of description, the following uses an example in which the intelligent control apparatus performs the method for description.

The method includes: obtaining a travel parameter; and determining a current driving scenario, where the current driving scenario includes an intelligent driving scenario, an intelligent driving low-speed scenario, an intelligent driving non-low-speed scenario, a manual driving normal scenario, or a manual driving fault scenario; and sending the travel parameter to a motor or a vehicle control apparatus based on the current driving scenario.

Based on the method provided in the first aspect, the intelligent control apparatus may obtain the travel parameter, determine the current driving scenario, and allocate the travel parameter based on the current driving scenario, thereby enriching working modes between the intelligent control apparatus, the vehicle control apparatus, and the motor. In this way, a final manner of allocating the travel parameter is applicable to the current driving scenario.

In a possible implementation, determining the current driving scenario includes: when detecting that an intelligent driving mode is enabled, determining that the current driving scenario includes the intelligent driving scenario; or when detecting that an intelligent driving mode is enabled and a vehicle speed is less than or equal to a first threshold, determining that the current driving scenario includes the intelligent driving low-speed scenario; or when detecting that an intelligent driving mode is enabled and a vehicle speed is greater than a first threshold, determining that the current driving scenario includes the intelligent driving non-low-speed scenario; or when handshake detection with the vehicle control apparatus is abnormal or communication with the vehicle control apparatus is interrupted, determining that the current driving scenario includes the manual driving fault scenario.

Based on the foregoing possible implementation, the intelligent control apparatus may determine the current driving scenario by detecting whether the intelligent driving mode is enabled, detecting the vehicle speed, or detecting handshake with the vehicle control apparatus.

In a possible implementation, sending the travel parameter to the motor or the vehicle control apparatus based on the current driving scenario includes: when the current driving scenario includes the intelligent driving scenario, the intelligent driving low-speed scenario, or the manual driving fault scenario, sending the travel parameter to the motor; or when the current driving scenario includes the intelligent driving non-low-speed scenario or the manual driving normal scenario, sending the travel parameter to the vehicle control apparatus.

Based on the foregoing possible implementation, the intelligent control apparatus may determine, based on an actual requirement of the current driving scenario, whether to send the travel parameter to the motor or send the travel parameter to the vehicle control apparatus. Specifically, the intelligent driving scenario or the intelligent driving low-speed scenario has a high requirement on vehicle displacement control precision. The intelligent control apparatus does not send the travel parameter to the motor via the vehicle control apparatus, but directly sends the travel parameter to the motor, so that response time of the motor can be reduced (at least 10 ms can be reduced). This implements high-precision vehicle displacement control. In the manual driving fault scenario, the vehicle control apparatus cannot work normally. Therefore, the intelligent driving apparatus may not send the travel parameter to the vehicle control apparatus, but send the travel parameter to the motor, so that the vehicle can travel normally. The intelligent driving non-low-speed scenario (for example, including a highway adaptive cruise scenario) does not have a high requirement on vehicle displacement control precision, and does not have a high requirement on motor control precision either. The intelligent control apparatus may send the travel parameter to the motor via the vehicle control apparatus, so that the vehicle control apparatus centrally manages other functions of the vehicle, for example, at least one of a vehicle dynamics control function, a vehicle kinematics control function, a vehicle energy management function, a vehicle speed limitation function, or a power system capability limitation function. In the manual driving normal scenario, the intelligent control apparatus sends the travel parameter to the vehicle control apparatus, so that a basis can be provided for the vehicle control apparatus to calculate the travel parameter.

In a possible implementation, sending the travel parameter to the vehicle control apparatus includes: when handshake detection with the vehicle control apparatus is normal, sending the travel parameter to the vehicle control apparatus.

Based on the foregoing possible implementation, the intelligent control apparatus and the vehicle control apparatus may perform handshake detection by using mechanisms such as heartbeat detection and/or interactive response, to detect whether the intelligent control apparatus and the vehicle control apparatus work normally. The intelligent control apparatus may send the travel parameter to the vehicle control apparatus when the vehicle control apparatus works normally, to ensure that the vehicle can travel normally.

In a possible implementation, sending the travel parameter to the vehicle control apparatus includes: when handshake detection with the vehicle control apparatus is abnormal, and handshake detection between the motor or a power apparatus and the vehicle control apparatus is normal, sending the travel parameter to the vehicle control apparatus.

Based on the foregoing possible implementation, if handshake detection between the intelligent control apparatus and the vehicle control apparatus is abnormal, it indicates that the intelligent control apparatus or the vehicle control apparatus is abnormal, but the intelligent control apparatus cannot determine which apparatus is abnormal. Therefore, the intelligent control apparatus may further determine an abnormal apparatus by using another apparatus or module (for example, the motor or the power apparatus), and send the travel parameter to the vehicle control apparatus when determining that the vehicle control apparatus works normally, to ensure that the vehicle can travel normally. It may be understood that if the handshake detection between the intelligent control apparatus and the vehicle control apparatus is abnormal, and the handshake detection between the motor or the power apparatus and the vehicle control apparatus is normal, it indicates that the vehicle control apparatus is normal. Therefore, the intelligent control apparatus may send the travel parameter to the vehicle control apparatus.

In a possible implementation, the method further includes: receiving a detection result from the motor or the power apparatus, where the detection result indicates whether the handshake detection between the motor or the power apparatus and the vehicle control apparatus is normal.

Based on the foregoing possible implementation, the intelligent control apparatus may determine whether the handshake detection between the motor or the power apparatus and the vehicle control apparatus is normal.

In a possible implementation, before sending the travel parameter to the vehicle control apparatus, the method further includes: sending first indication information to the vehicle control apparatus, where the first indication information indicates to prepare to process the travel parameter.

Based on the foregoing possible implementation, the intelligent control apparatus may indicate the vehicle control apparatus to prepare to process the travel parameter, so that vehicle control permission is smoothly handed over subsequently, to avoid that no apparatus allocates the travel parameter within a period of time, or avoid that a plurality of apparatuses allocate the travel parameter within a period of time, and the motor does not know which travel parameter to adopt. This improves travel safety of the vehicle.

In a possible implementation, before sending the travel parameter to the vehicle control apparatus, the method further includes: sending first check information to the vehicle control apparatus, where the first check information is used to check whether preparation is completed; and receiving response information of the first check information from the vehicle control apparatus, where the response information indicates that preparation is completed.

Based on the foregoing possible implementation, the intelligent control apparatus may hand over the vehicle control permission after the vehicle control apparatus completes preparation, to improve travel safety of the vehicle.

In a possible implementation, the current driving scenario includes the manual driving fault scenario, and the intelligent control apparatus has all or a part of functions of the vehicle control apparatus.

Based on the foregoing possible implementation, in the manual driving fault scenario, the vehicle control apparatus is abnormal. In this case, the intelligent control apparatus may be used as a redundant apparatus of the vehicle control apparatus, and perform all or a part of operations of the vehicle control apparatus, so that the vehicle can normally travel in the manual driving fault scenario, thereby ensuring travel safety of the vehicle.

In a possible implementation, the intelligent control apparatus is connected to a throttle signal and a braking signal, and the intelligent control apparatus has all the functions of the vehicle control apparatus. Alternatively, the intelligent control apparatus is not connected to a throttle signal and a braking signal, and the intelligent control apparatus has the part of the functions of the vehicle control apparatus.

Based on the foregoing possible implementation, when the intelligent control apparatus is connected to the throttle signal and the braking signal, the intelligent control apparatus may receive a driving requirement and a braking requirement of a driver, and the intelligent control apparatus may have all the functions of the vehicle control apparatus, to replace the vehicle control apparatus. When the intelligent control apparatus is not connected to the throttle signal and the braking signal, the intelligent control apparatus cannot receive the driving requirement and the braking requirement of the driver. Therefore, the intelligent control apparatus cannot completely replace the vehicle control apparatus, but has the part of the functions of the vehicle control apparatus. It may be understood that a manner of connecting the intelligent control apparatus to the throttle signal and the braking signal is not limited in this embodiment of this application. The intelligent control apparatus may be directly connected to the two signals, for example, connected through a hard wire, or the intelligent control apparatus is indirectly connected to the two signals, for example, the two types of signals are indirectly obtained through a CAN or a feature bus of the CAN.

In a possible implementation, the method further includes: detecting whether a collaborative processing function of the travel parameter is enabled; and when the collaborative processing function is enabled, sending second indication information to the motor, where the second indication information indicates to collaboratively process the travel parameter.

Based on the foregoing possible implementation, when detecting that the collaborative processing function is enabled, the intelligent control apparatus may indicate the motor to collaboratively process the travel parameter, to improve stability of the vehicle and passenger comfort of the driver and a passenger.

In a possible implementation, the travel parameter includes at least one of the following: torque, vehicle speed, wheel speed, vehicle acceleration, motor phase angle, vehicle distance, or wheel track.

Based on the foregoing possible implementation, the intelligent control apparatus may allocate a plurality of types of parameters, to control the vehicle from a plurality of aspects.

In a possible implementation, the vehicle control apparatus is a vehicle control unit, a vehicle control domain controller, a hybrid power control unit, or a multi-domain controller.

Based on the foregoing possible implementation, a function of the vehicle control apparatus may be flexibly deployed in a device in the vehicle.

According to a second aspect, a travel parameter allocation method is provided. The method may be performed by a vehicle control apparatus, or may be performed by a module used in the vehicle control apparatus, for example, a chip, a chip system, or a circuit, or may be implemented by a logical module or software that can implement all or a part of functions of the vehicle control apparatus. This is not limited. For ease of description, the following uses an example in which the vehicle control apparatus performs the method for description.

The method includes: receiving first indication information from an intelligent control apparatus, where the first indication information indicates to prepare to process a travel parameter; receiving a first travel parameter from the intelligent control apparatus; and sending a second travel parameter to a motor, where the second travel parameter is obtained based on the first travel parameter.

Based on the method provided in the second aspect, the vehicle control apparatus may allocate the travel parameter to the motor after the intelligent control apparatus indicates to prepare to process the travel parameter, so that vehicle control permission is smoothly handed over from the intelligent control apparatus to the vehicle control apparatus, to avoid that no apparatus allocates the travel parameter within a period of time, or avoid that a plurality of apparatuses allocate the travel parameter within a period of time, and the motor does not know which travel parameter to adopt. This improves travel safety of the vehicle.

In a possible implementation, before sending the second travel parameter to the motor, the method further includes: receiving first check information from the intelligent control apparatus, where the first check information is used to check whether preparation is completed; and sending response information of the first check information to the intelligent control apparatus, where the response information indicates that preparation is completed.

Based on the foregoing possible implementation, the intelligent control apparatus may determine whether the vehicle control apparatus prepares to allocate the travel parameter to the motor.

In a possible implementation, before receiving the first indication information from the intelligent control apparatus, the method further includes: determining that handshake detection with the intelligent control apparatus is normal; or determining that handshake detection with the intelligent control apparatus is abnormal, but handshake detection with the motor or a power apparatus is normal.

Based on the foregoing possible implementation, when determining that the vehicle control apparatus is normal, the intelligent control apparatus may indicate the vehicle control apparatus to prepare to process the travel parameter, to ensure travel safety of the vehicle. It may be understood that, that handshake detection between the vehicle control apparatus and the intelligent control apparatus is normal may indicate that the vehicle control apparatus is normal. If the handshake detection between the vehicle control apparatus and the intelligent control apparatus is abnormal, it may indicate that at least one of the vehicle control apparatus and the intelligent control apparatus is abnormal or a communication link between the vehicle control apparatus and the intelligent control apparatus is abnormal, but the handshake detection between the vehicle control apparatus and the motor or the power apparatus is normal, it may indicate that at least the vehicle control apparatus works normally.

In a possible implementation, the first travel parameter includes at least one of the following: torque, vehicle speed, wheel speed, vehicle acceleration, motor phase angle, vehicle distance, or wheel track.

Based on the foregoing possible implementation, the vehicle control apparatus may allocate a plurality of types of parameters, to control the vehicle from a plurality of aspects.

In a possible implementation, the intelligent control apparatus is an autonomous driving system, an advanced assisted driving system, a multi-domain controller, an autonomous driving control unit, or a high-performance computing center.

Based on the foregoing possible implementation, a function of the intelligent control apparatus may be flexibly deployed in a device in the vehicle.

According to a third aspect, a vehicle-mounted device is provided, to implement the foregoing method. The vehicle-mounted device may be the intelligent control apparatus in the first aspect, or an apparatus including the intelligent control apparatus, or a module in the intelligent control apparatus in the first aspect, for example, a chip, a chip system, or a circuit, or a logical module or software that can implement a part of or all functions of the intelligent control apparatus. The vehicle-mounted device includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the third aspect, in a possible implementation, the vehicle-mounted device may include a processing module and a transceiver module. The processing module may be configured to implement a processing function in any one of the first aspect and the possible implementations of the first aspect. The processing module may be, for example, a processor. The transceiver module may also be referred to as a transceiver unit, and is configured to implement a sending function and/or a receiving function in any one of the first aspect and the possible implementations of the first aspect. The transceiver module may include a transceiver circuit, a transceiver machine, a transceiver, or a communication interface.

With reference to the third aspect, in a possible implementation, the transceiver module includes a sending module and a receiving module, respectively configured to implement sending and receiving functions in any one of the first aspect and the possible implementations of the first aspect.

According to a fourth aspect, a vehicle-mounted device is provided, to implement the foregoing method. The vehicle-mounted device may be the vehicle control apparatus in the second aspect, or an apparatus including the vehicle control apparatus, or a module in the vehicle control apparatus in the second aspect, for example, a chip, a chip system, or a circuit, or a logical module or software that can implement a part of or all functions of the vehicle control apparatus. The vehicle-mounted device includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the fourth aspect, in a possible implementation, the vehicle-mounted device may include a transceiver module. The transceiver module may also be referred to as a transceiver unit, and is configured to implement a sending function and/or a receiving function in any one of the second aspect and the possible implementations of the second aspect. The transceiver module may include a transceiver circuit, a transceiver machine, a transceiver, or a communication interface.

With reference to the fourth aspect, in a possible implementation, the transceiver module includes a sending module and a receiving module, respectively configured to implement sending and receiving functions in any one of the second aspect and the possible implementations of the second aspect.

With reference to the fourth aspect, in a possible implementation, the vehicle-mounted device may further include a processing module. The processing module may be configured to implement a processing function in any one of the second aspect and the possible implementations of the second aspect. The processing module may be, for example, a processor.

According to a fifth aspect, a vehicle-mounted device is provided, including a processor. The processor is configured to: after being coupled to a memory and reading instructions in the memory, perform the method in any one of the foregoing aspects according to the instructions. The vehicle-mounted device may be the intelligent control apparatus in the first aspect, or an apparatus including the intelligent control apparatus, or a module in the intelligent control apparatus in the first aspect, for example, a chip, a chip system, or a circuit, or a logical module or software that can implement a part of or all functions of the intelligent control apparatus. Alternatively, the vehicle-mounted device may be the vehicle control apparatus in the second aspect, or an apparatus including the vehicle control apparatus, or a module in the vehicle control apparatus in the second aspect, for example, a chip, a chip system, or a circuit, or a logical module or software that can implement a part of or all functions of the vehicle control apparatus.

With reference to the fifth aspect, in a possible implementation, the vehicle-mounted device further includes a memory. The memory is configured to store necessary program instructions and necessary data.

With reference to the fifth aspect, in a possible implementation, the vehicle-mounted device is a chip or a chip system. Optionally, when the vehicle-mounted device is the chip system, the vehicle-mounted device may include a chip, or may include a chip and another discrete device.

According to a sixth aspect, a vehicle-mounted device is provided, including a processor and an interface circuit. The interface circuit is configured to receive a computer program or instructions and transmit the computer program or the instructions to the processor. The processor is configured to execute the computer program or the instructions, to enable the vehicle-mounted device to perform the method in any one of the foregoing aspects. The vehicle-mounted device may be the intelligent control apparatus in the first aspect, or an apparatus including the intelligent control apparatus, or a module in the intelligent control apparatus in the first aspect, for example, a chip, a chip system, or a circuit, or a logical module or software that can implement a part of or all functions of the intelligent control apparatus. Alternatively, the vehicle-mounted device may be the vehicle control apparatus in the second aspect, or an apparatus including the vehicle control apparatus, or a module in the vehicle control apparatus in the second aspect, for example, a chip, a chip system, or a circuit, or a logical module or software that can implement a part of or all functions of the vehicle control apparatus.

With reference to the sixth aspect, in a possible implementation, the vehicle-mounted device is a chip or a chip system. Optionally, when the vehicle-mounted device is the chip system, the vehicle-mounted device may include a chip, or may include a chip and another discrete device.

According to a seventh aspect, a computer-readable storage medium is provided. The computer-readable storage medium stores instructions. When the instructions are run on a computer, the computer is enabled to perform the method in any one of the foregoing aspects.

According to an eighth aspect, a computer program product including instructions is provided. When the instructions are run on a computer, the computer is enabled to perform the method in any one of the foregoing aspects.

According to a ninth aspect, an intelligent driving vehicle is provided. The intelligent driving vehicle includes an intelligent control apparatus configured to perform the method in the first aspect, and/or a vehicle control apparatus configured to perform the method in the second aspect. Alternatively, the intelligent driving vehicle includes the vehicle-mounted device in the third aspect and/or the vehicle-mounted device in the fourth aspect.

According to a tenth aspect, a vehicle-mounted system is provided. The vehicle-mounted system includes an intelligent control apparatus configured to perform the method in the first aspect, and/or a vehicle control apparatus configured to perform the method in the second aspect. Alternatively, the vehicle-mounted system includes the vehicle-mounted device in the third aspect and/or the vehicle-mounted device in the fourth aspect.

For technical effect brought by any possible implementation of the third aspect to the tenth aspect, refer to technical effect brought by any one of the first aspect to the second aspect or different possible implementations of any one of the first aspect to the second aspect. Details are not described herein again.

It may be understood that the solutions in the foregoing aspects may be combined on a premise that the solutions are not contradictory.

### BRIEF DESCRIPTION OF DRAWINGS

FIG. 1A is a diagram of an architecture of a vehicle-mounted system according to an embodiment of this application;
FIG. 1B is a diagram of a structure of an intelligent control apparatus 101 according to an embodiment of this application;
FIG. 1C is a diagram of a vehicle network architecture according to an embodiment of this application;
FIG. 2 is a diagram of a hardware structure of a vehicle-mounted device according to an embodiment of this application;
FIG. 3 is a schematic flowchart 1 of a travel parameter allocation method according to an embodiment of this application;
FIG. 4A to FIG. 4C are a schematic flowchart 2 of a travel parameter allocation method according to an embodiment of this application;
FIG. 5 is a diagram 1 of a structure of a vehicle-mounted device according to an embodiment of this application; and
FIG. 6 is a diagram 2 of a structure of a vehicle-mounted device according to an embodiment of this application.

### DESCRIPTION OF EMBODIMENTS

The following describes in detail implementations of embodiments of this application with reference to the accompanying drawings.

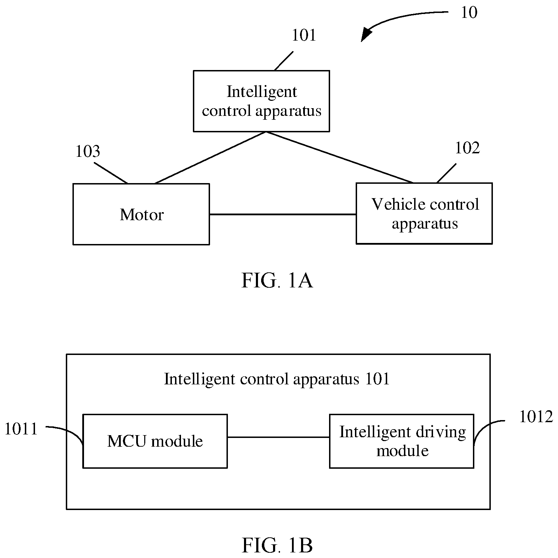

The method provided in embodiments of this application may be used in various vehicle-mounted systems. The following uses a vehicle-mounted system 10 shown in FIG. 1A as an example to describe the method provided in embodiments of this application. FIG. 1A is merely a diagram, and does not constitute a limitation on an applicable scenario of the technical solutions provided in this application.

FIG. 1A is a diagram of an architecture of the vehicle-mounted system 10 according to an embodiment of this application. In FIG. 1A, the vehicle-mounted system 10 may include an intelligent control apparatus 101, a vehicle control apparatus 102 that can be communicatively connected to the intelligent control apparatus 101, and a motor 103 that can be communicatively connected to the intelligent control apparatus 101 and the vehicle control apparatus 102.

In embodiments of this application, that any two apparatuses/devices/modules are communicatively connected may be understood as that the two apparatuses/devices/modules directly communicate with each other in a wired manner or a wireless manner, or indirectly communicate with each other through another apparatus/device/module. For example, a communication connection between the intelligent control apparatus 101 and the vehicle control apparatus 102 may be understood as that the intelligent control apparatus 101 and the vehicle control apparatus 102 directly communicate with each other in a wired manner or a wireless manner, or indirectly communicate with each other through the motor 103.

In this embodiment of this application, wired communication may be communication in at least one of the following manners: through an Ethernet, a controller area network (controller area network, CAN), a CAN with flexible data-rate (CAN with flexible data-rate, CANFD), a CANXL, a local interconnect network (local interconnect network, LIN), media oriented system transport (media oriented system transport, MOST), a hard wire (an AD type, a DI type, or the like), a single edge nibble transmission (single edge nibble transmission, SENT) bus, a general-purpose input/output (general-purpose input/output, GPIO) interface, a universal asynchronous receiver/transmitter (universal asynchronous receiver/transmitter, UART), FlexRay, or the like. The wireless manner may be communication through a cellular network, a Wi-Fi system, Bluetooth, or the like. The cellular network may include any one or more networks related to the 3rd generation partnership project (3rd generation partnership project, 3GPP), for example, a 4th generation (4th generation, 4G) network, a 5th generation (5th generation, 5G) network, or a future evolved network.

In this embodiment of this application, the intelligent control apparatus, for example, the intelligent control apparatus 101, may be any device having a transceiver function and a computing function. In an example, the intelligent control apparatus is an automated driving system (automated driving system, ADS), an advanced driver assistance system (advanced driver assistance system, ADAS), a multi-domain controller (multi-domain controller, MDC), a mobile data center (mobile data center, MDC), a high performance computer (high performance computer, HPC), an automated driving control unit (automated driving control unit, ADCU), a vehicle control unit (vehicle control unit, VCU), or the like. The multi-domain controller may also be referred to as a cross-domain controller.

In this embodiment of this application, the vehicle control apparatus, for example, the vehicle control apparatus 102, may be any device having a transceiver function and a computing function. In an example, the vehicle control apparatus is a VCU, a hybrid control unit (hybrid control unit, HCU), a vehicle domain controller (vehicle domain controller, VDC), a multi-domain controller, a mobile data center, or a power chassis domain controller.

In this embodiment of this application, the motor, for example, the motor 103, may be any device having a transceiver function and a computing function. For example, the motor may receive a control instruction from the intelligent control apparatus or the vehicle control apparatus, and control the motor to run according to the control instruction.

The intelligent control apparatus or the vehicle control apparatus in this application may be a vehicle-mounted module, a vehicle-mounted component, a vehicle-mounted chip, or a vehicle-mounted unit that is built in a vehicle as one or more components or units. The vehicle may implement a method in this application by using the vehicle-mounted module, the vehicle-mounted component, the vehicle-mounted chip, or the vehicle-mounted unit that is built in the vehicle.

The vehicle-mounted system 10 shown in FIG. 1A is merely used as an example, and is not intended to limit the technical solutions of this application. A person skilled in the art should understand that in a specific implementation process, the vehicle-mounted system 10 may further include another device, and a quantity of intelligent control apparatuses, vehicle control apparatuses, or motors may also be determined based on a specific requirement. This is not limited.

In some embodiments, the intelligent control apparatus 101 may have an intelligent driving function and an intelligent control function. For example, as shown in FIG. 1B, the intelligent control apparatus 101 may include a micro controller unit (micro controller unit, MCU) module 1011 and an intelligent driving module 1012.

In FIG. 1B, the intelligent driving module 1012 may have an autonomous driving function or a driving assistance function. For example, the intelligent driving module 1012 has at least one of the following functions: a sensing function, a fusion function, a planning function, or a control function.

For example, a sensing module is deployed in the intelligent driving module 1012 to sense an ambient environment. The sensing module may include at least one of the following: camera, lidar, ultrasonic radar, millimeter-wave radar, inertial measuring unit (inertial measuring unit, IMU), inertial navigation module, or the like.

Optionally, the intelligent driving module 1012 has an interface for communicating with an external device, for example, has at least one of the following interfaces: a CAN interface, a LIN interface, a GPIO interface, an Ethernet interface, a low voltage differential signaling (low-voltage differential signaling, LVDS) interface, or the like.

In FIG. 1B, an MCU module 1011 may have an intelligent control function, can monitor the intelligent driving module 1012, and process information obtained by the intelligent driving module 1012. For example, the MCU module 1011 has at least one of the following functions: calculating a travel parameter, allocating a travel parameter, arbitration, switching management, handshake detection with a vehicle control apparatus, handshake detection with a motor, security monitoring, or the like. Optionally, the MCU module 1011 further has at least one of the following functions: a sensing function, a fusion function, a planning function, or a control function.

Optionally, a communication manner between the MCU module 1011 and the intelligent driving module 1012 includes but is not limited to at least a CAN, a CANFD, a CANXL, an Ethernet, a serial peripheral interface (serial peripheral interface, SPI), a UART, peripheral component interconnect express (peripheral component interconnect express, PCIe), an inter-integrated circuit (inter-integrated circuit, I2C) interface, GPIO, or another high-speed bus.

It may be understood that the MCU module 1011 exists in a form including but not limited to a circuit assembly of an independent MCU chip, an MCU core in a high-level chip, or another core (an A core, an M core, or the like).

In an example, the MCU module 1011 and the intelligent driving module 1012 share a housing and are on different boards, or share a board (for example, a circuit board or a printed circuit board (printed circuit board, PCB)) and have different chips, or share a board and a chip, or share a chip and have different cores, or share a core and have different tasks, or the like.

In another example, the intelligent driving module 1012 is a module that has an advanced autonomous driving function or a high-computing power function in the intelligent control apparatus 101, and the MCU module 1011 is a monitoring chip in the intelligent control apparatus 101, and is configured to perform security monitoring or power-on/off control.

The intelligent control apparatus 101 shown in FIG. 1B is merely used as an example, and is not intended to limit the technical solutions of this application. A person skilled in the art should understand that, in a specific implementation process, the intelligent control apparatus 101 may further include another module, and a quantity of MCU modules or intelligent driving modules may also be determined based on a specific requirement. This is not limited.

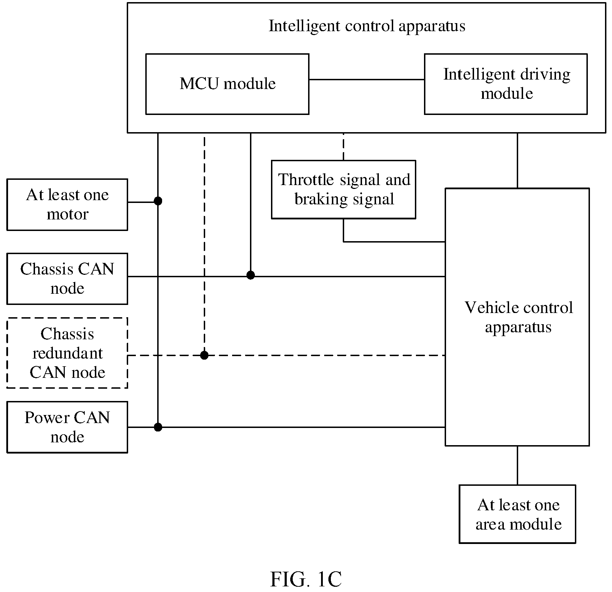

In a possible implementation, the vehicle-mounted system 10 shown in FIG. 1A may be applied to the network architecture shown in FIG. 1C.

FIG. 1C shows a network architecture according to an embodiment of this application. In FIG. 1C, the network architecture includes an intelligent control apparatus, a vehicle control apparatus, at least one motor, a chassis CAN node, a power CAN node, and at least one area module. The intelligent control apparatus includes an MCU module and an intelligent driving module. Optionally, the network architecture further includes a chassis redundant CAN node.

It may be understood that an apparatus corresponding to the intelligent control apparatus 101 in FIG. 1A is the intelligent control apparatus in FIG. 1C, an apparatus corresponding to the vehicle control apparatus 102 in FIG. 1A is the vehicle control apparatus in FIG. 1C, and an apparatus corresponding to the motor 103 in FIG. 1A is the at least one motor in FIG. 1C.

It may be understood that a module corresponding to the MCU module 1011 in FIG. 1B is the MCU module in FIG. 1C, and a module corresponding to the intelligent driving module 1012 in FIG. 1B is the intelligent driving module in FIG. 1C.

In FIG. 1C, the at least one motor, the chassis CAN node, the power CAN node, and the chassis redundant CAN node are separately communicatively connected to the intelligent control apparatus and the vehicle control apparatus, and the at least one area module is communicatively connected to the vehicle control apparatus. The vehicle control apparatus is further connected to at least one throttle signal and at least one braking signal, to receive the throttle signal when a driver steps on a throttle pedal, or receive the braking signal when the driver steps on a brake pedal. Optionally, the intelligent control apparatus is connected to the at least one throttle signal and the at least one braking signal, to receive the throttle signal when the driver steps on the throttle pedal, or receive the braking signal when the driver steps on the brake pedal.

In this embodiment of this application, the throttle signal may be replaced with an accelerator pedal signal or a throttle pedal signal. The driver can reflect an acceleration need by using strength of stepping on the pedal. Generally, a pedal opening is directly proportional to or positively correlated to a required torque. For example, a larger pedal opening indicates a larger required torque, and a smaller pedal opening indicates a smaller required torque. A connection form between the throttle signal, and the intelligent control apparatus and the vehicle control apparatus includes at least a hard wire (an AD type), a SENT bus, a CAN bus, a CANFD bus, a CANXL bus, Ethernet, an SPI bus, a UART bus, a PCIe bus, an I2C bus, an LVDS bus, a LIN bus, or another bus.

In this embodiment of this application, the braking signal may alternatively be a braking switch signal or a braking pedal signal. The driver can reflect a braking need by using strength of stepping on the brake pedal. Generally, stepping on the pedal indicates a braking requirement. A larger stepping amplitude indicates a larger braking requirement, and a smaller stepping amplitude indicates a smaller braking requirement. A connection form between the braking signal and the intelligent control apparatus and the vehicle control apparatus includes at least a hard wire (DI type), a SENT bus, a CAN bus, a CANFD bus, a CANXL bus, Ethernet, an SPI bus, a UART bus, a PCIe bus, an I2C bus, an LVDS bus, a LIN bus, or another bus.

In this embodiment of this application, that the vehicle control apparatus or the intelligent control apparatus is connected to the at least one throttle signal and the at least one braking signal may be understood as that the vehicle control apparatus or the intelligent control apparatus is directly connected to the at least one throttle signal and the at least one braking signal, for example, is connected through a hard wire; or may be understood as that the vehicle control apparatus or the intelligent control apparatus is indirectly connected to the at least one throttle signal and the at least one brake signal, for example, obtains the at least one throttle signal and the at least one brake signal indirectly through a CAN or another bus.

The following describes the apparatuses or modules in FIG. 1C in detail.

In FIG. 1C, the intelligent control apparatus may include the MCU module and the intelligent driving module. For specific descriptions of the MCU module and the intelligent driving module, refer to the descriptions of the MCU module 1011 and the intelligent driving module 1012 in FIG. 1B. Details are not described herein again.

Optionally, a function of the intelligent control apparatus may be deployed on another module or apparatus of the vehicle, for example, may be deployed on the vehicle control apparatus, and/or the at least one motor, and/or the power CAN node, and/or the at least one area module, and/or at least one domain controller (not shown in FIG. 1C), and/or the intelligent control apparatus. In this case, the intelligent control apparatus may not be included in FIG. 1C, and an apparatus or module that is communicatively connected to the intelligent control apparatus should be communicatively connected to an apparatus or module on which a function of the intelligent control apparatus is deployed.

In FIG. 1C, the vehicle control apparatus may control a vehicle in a manual driving normal scenario, an assisted driving scenario, or a man-machine co-driving scenario (for example, a switch and transition phase between an intelligent driving scenario and a manual driving scenario). For example, a requirement of a driver and/or a requirement of the intelligent control apparatus are identified, logical operation processing is performed, a processing result is converted into a corresponding control instruction, and the corresponding control instruction is delivered to a corresponding apparatus (for example, the chassis CAN node, and/or the power CAN node, and/or a central control instrument display node), so that the apparatus executes the instruction. The driver may reflect a requirement by operating a device or a button in the vehicle. For example, the driver reflects a braking requirement by stepping on a braking pedal, reflects an acceleration requirement by stepping on an accelerator pedal, reflects a gear shift requirement by operating a gear rod, reflects a charging requirement by connecting the vehicle to a charging pile, reflects a parking requirement by using a parking button, reflects a software upgrade requirement by using an upgrade button, and reflects a driving mode requirement by using a button corresponding to each driving mode.

In a possible design, the vehicle control apparatus has at least one of the following functions: a travel parameter calculation function in a manual driving scenario, a travel parameter transition and takeover function upon exiting of the intelligent driving scenario, a multi-motor travel parameter allocation and control function, a multi-direction collaborative control function (for example, a collaborative control function in at least two directions of a lateral direction, a longitudinal direction, or a vertical direction), a vehicle driving capability limitation protection function, a vehicle mode management and matching function (for example, driving, charging, parking, high-voltage and low-voltage power-on and power-off, energy consumption management, fault diagnosis, system degrade, network management, or software upgrade), a function of handshake detection with the intelligent driving apparatus, a function of switching with the intelligent driving apparatus to control the vehicle, a function of handshake detection with the at least one motor, or a function of handshake detection with the power CAN node.

Control in the longitudinal direction may include driving and/or braking. Control in the lateral direction may include at least one of the following: direction steering, angular velocity of the direction steering, vehicle body angle, angular velocity of the vehicle body angle, wheel angle, angular velocity of the wheel angle, heading angle, angular velocity of the heading angle, yaw angle, angular velocity of the yaw angle, torque, motor phase, or distance from a target. Control in the vertical direction may include at least one of the following: vehicle body height, vehicle body height acceleration, suspension height acceleration, seat height acceleration, vehicle centroid height acceleration, suspension damping, or suspension rigidity. It should be understood that the foregoing parameters may be represented based on absolute values, and a value of the foregoing parameter is a positive number, a negative number, or zero.

Optionally, a function of the vehicle control apparatus may be deployed on another module or apparatus of the vehicle, for example, may be deployed on the at least one motor, and/or the power CAN node, and/or the at least one area module, and/or at least one domain controller (not shown in FIG. 1C), and/or the intelligent control apparatus. In this case, the vehicle control apparatus may not be included in FIG. 1C, and an apparatus or module that is communicatively connected to the vehicle control apparatus should be communicatively connected to an apparatus or module on which a function of the vehicle control apparatus is deployed.

For example, a function of the vehicle control apparatus may be deployed on a motor in the at least one motor, and a motor other than the motor in the at least one motor, the chassis CAN node, the chassis redundant CAN node, the power CAN node, the at least one area module, the intelligent control apparatus, the throttle signal, and the braking signal are all communicatively connected to the motor.

For another example, a function of the vehicle control apparatus is split and deployed on the at least one motor, and the chassis CAN node, the chassis redundant CAN node, the power CAN node, the at least one area module, the intelligent control apparatus, the throttle signal, and the braking signal are all communicatively connected to the at least one motor.

In FIG. 1C, the at least one motor may receive the control instruction from the vehicle control apparatus, and/or the intelligent control apparatus, and/or the chassis CAN node, and execute the instruction. For example, the at least one motor includes one motor, two motors, or four motors. For example, the at least one motor includes a front-axle single motor, a rear-axle single motor, or two motors on front and rear axles.

Optionally, a function of the at least one motor may be deployed on another apparatus or module of the vehicle, for example, may be deployed on the vehicle control apparatus. In this case, the at least one motor may not be included in FIG. 1C, and an apparatus or a module that is communicatively connected to the at least one motor should be communicatively connected to an apparatus or a module on which a function of the at least one motor is deployed.

In FIG. 1C, the chassis CAN node may include at least one of the following nodes: a steering control node, a braking control node, a gear control node, or a suspension control node. It should be understood that, in a specific application, the chassis CAN node may further include another node, which is not limited. The node included in the chassis CAN node is connected to a same CAN through at least one of a CAN bus, a CANFD bus, a CANXL bus, or another bus.

In FIG. 1C, the chassis redundant CAN node is a redundant node of the chassis CAN node, and may include at least one of the following nodes: a steering control redundant node, a braking control redundant node, a gear control redundant node, or a suspension control redundant node. It should be understood that, in a specific application, the chassis redundant CAN node may further include another node, which is not limited. The node included the chassis redundant CAN node is connected to a same CAN through at least one of a CAN bus, a CANFD bus, a CANXL bus, or another bus. The redundancy may be understood as mechanical redundancy, and/or control redundancy, and/or drive redundancy.

In FIG. 1C, the power CAN node includes at least one power domain node, and the power domain node included in the power CAN node is connected to one CAN through at least one of a CAN bus, a CANFD bus, a CANXL bus, or another bus. The power CAN node can undertake control and execution of a power system of a vehicle. For example, the power CAN node includes at least one of the following: motor module, battery module, direct current (direct current, DC)-to-DC module (DCDC module), on-board charging (on-board charger, OBC) module, power distribution unit (power distribution unit, PDU), thermal management system (thermal management system, TMS), engine management system (engine management system, EMS), VCU, conventional fuel vehicle engine, or hybrid controller. Optionally, the CAN connected to the power CAN node may be divided into a plurality of network segments based on a CAN load rate.

In FIG. 1C, at least one area module may be distributed at various locations of the vehicle, and has at least one of the following functions: area access (for example, access of various GPIOs of the vehicle), interface extension, area power supply, area driving (for example, a port with a current may directly drive a peripheral), area communication (for example, communication through routing, protocol conversion, or forwarding), or undertaking a part of control functions (for example, a control function of a vehicle body). It may be understood that the at least one area module is an optional module, and may be flexibly configured based on a requirement.

Optionally, the at least one area module may communicate with the vehicle control apparatus in at least one of the following manners: through a CAN bus, a CANFD bus, a CANXL bus, Ethernet, an SPI bus, a UART bus, a PCIe bus, an I2C bus, a GPIO bus, or another high-speed bus.

It may be understood that the network architecture shown in FIG. 1C is merely used as an example, and is not intended to limit the technical solutions of this application. A person skilled in the art should understand that, in a specific implementation process, the network architecture may further include another module, and a quantity of modules, nodes, or apparatuses included in the network architecture may also be determined based on a specific requirement. This is not limited.

Optionally, each apparatus (for example, the intelligent control apparatus 101 in FIG. 1A, the vehicle control apparatus 102 in FIG. 1A, the intelligent control apparatus in FIG. 1C, or the vehicle control apparatus in FIG. 1C) in FIG. 1A or FIG. 1C in embodiments of this application may also be referred to as a vehicle-mounted apparatus, and may be a general-purpose device or a dedicated device. This is not specifically limited in this embodiment of this application.

Optionally, related functions of each apparatus (for example, the intelligent control apparatus 101 in FIG. 1A, the vehicle control apparatus 102 in FIG. 1A, the intelligent control apparatus in FIG. 1C, or the vehicle control apparatus in FIG. 1C) in FIG. 1A or FIG. 1C in embodiments of this application may be implemented by one device, or may be jointly implemented by a plurality of devices, or may be implemented by one or more functional modules in one device. This is not specifically limited in this embodiment of this application. It may be understood that, the foregoing function may be an element in a hardware device, or may be a software function running on dedicated hardware, or a combination of hardware and software, or a virtualization function instantiated on a platform (for example, a cloud platform).

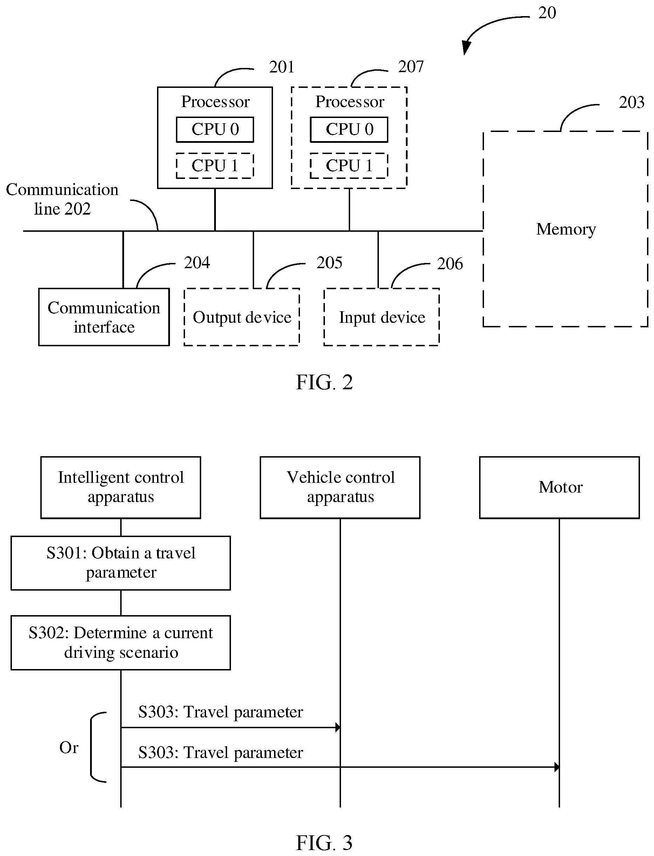

During specific implementation, each apparatus (for example, the intelligent control apparatus 101 in FIG. 1A, the vehicle control apparatus 102 in FIG. 1A, the intelligent control apparatus in FIG. 1C, or the vehicle control apparatus in FIG. 1C) in FIG. 1A or FIG. 1C in embodiments of this application may use a composition structure shown in FIG. 2, or include components shown in FIG. 2. FIG. 2 is a diagram of a hardware structure of a vehicle-mounted device according to an embodiment of this application. The vehicle-mounted device 20 includes at least one processor 201 and at least one communication interface 204, and is configured to implement the method provided in embodiments of this application. The vehicle-mounted device 20 may further include a communication line 202 and a memory 203.

The processor 201 may be a general-purpose central processing unit (central processing unit, CPU), a microprocessor, an application-specific integrated circuit (application-specific integrated circuit, ASIC), or one or more integrated circuits configured to control execution of programs in the solutions in this application.

The communication line 202 may include a channel like a bus for transmitting information between the foregoing components.

The communication interface 204 is configured to communicate with another device or a communication network. The communication interface 204 may be any apparatus like a transceiver, for example, may be an Ethernet interface, a radio access network (radio access network, RAN) interface, a wireless local area network (wireless local area network, WLAN) interface, a transceiver, a pin, a bus, or a transceiver circuit.

The memory 203 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of instruction structure or data structure and that is accessible to a computer, but is not limited thereto. The memory may exist independently, and is coupled to the processor 201 through the communication line 202. The memory 203 may alternatively be integrated with the processor 201. The memory provided in embodiments of this application may be usually non-volatile.

The memory 203 is configured to store computer-executable instructions for executing the solutions provided in embodiments of this application, and the processor 201 controls execution. The processor 201 is configured to execute the computer-executable instructions stored in the memory 203, to implement the method provided in embodiments of this application. Alternatively, optionally, in embodiments of this application, the processor 201 may perform processing-related functions in a method provided in the following embodiments of this application, and the communication interface 204 is responsible for communication with another device or a communication network. This is not specifically limited in embodiments of this application.

Optionally, the computer-executable instructions in this embodiment of this application may also be referred to as application program code. This is not specifically limited in this embodiment of this application.

The coupling in embodiments of this application may be an indirect coupling or a communication connection between apparatuses, units, or modules in an electrical form, a mechanical form, or another form, and is used for information exchange between the apparatuses, the units, or the modules.

In an embodiment, the processor 201 may include one or more CPUs, for example, a CPU 0 and a CPU 1 in FIG. 2.

In an embodiment, the vehicle-mounted device 20 may include a plurality of processors, for example, the processor 201 and a processor 207 in FIG. 2. Each of the processors may be a single-CPU (single-CPU) processor, or may be a multi-CPU (multi-CPU) processor. The processor herein may be one or more devices, circuits, and/or processing cores configured to process data (for example, computer program instructions).

In an embodiment, the vehicle-mounted device 20 may further include an output device 205 and/or an input device 206. The output device 205 is coupled to the processor 201, and may display information in a plurality of manners. For example, the output device 205 may be a liquid crystal display (liquid crystal display, LCD), a light-emitting diode (light-emitting diode, LED) display device, a cathode ray tube (cathode ray tube, CRT) display device, or the like. The input device 206 is coupled to the processor 201, and may receive an input of a user in a plurality of manners. For example, the input device 206 may be a touchscreen device or a sensor device.

It may be understood that, a composition structure shown in FIG. 2 does not constitute a limitation on the vehicle-mounted device. In addition to the components shown in FIG. 2, the vehicle-mounted device may include more or fewer components than those shown in the figure, or a combination of some components, or splits from some components, or a different component layout.

The following describes, with reference to the accompanying drawings, the method provided in embodiments of this application. Network elements in the following embodiments may have the components shown in FIG. 2. Details are not described again.

It may be understood that the method provided in embodiments of this application may be applied to a plurality of fields, for example, an unmanned driving field, an autonomous driving field, an assisted driving field, an intelligent driving field, a connected driving field, an intelligent connected driving field, and an automobile sharing field.

It may be understood that this application may be applied to a manual driving scenario, an autonomous driving scenario, an assisted driving scenario, and a transitional scenario between two scenarios (for example, a transitional scenario between the manual driving scenario and the autonomous driving scenario (or the assisted driving scenario)). Optionally, this application may be further applied to longitudinal motion control in the foregoing scenarios, and/or collaborative control (for example, collaborative control of at least two of steering, braking, or suspension) of lateral motion and vertical motion in the foregoing scenarios.

It may be understood that, names of messages between the network elements, names of parameters in the messages, or the like in the following embodiments of this application are merely examples, and there may be other names in a specific implementation. This is not specifically limited in embodiments of this application.

It may be understood that, in embodiments of this application, "/" may represent an "or" relationship between associated objects. For example, A/B may represent A or B. "And/or" may be used to describe three relationships existing between the associated objects. For example, "A and/or B" may represent the following three cases: Only A exists, both A and B exist, and only B exists, where A and B may be singular or plural. In addition, a representation similar to "at least one of A, B, and C" or "at least one of A, B, or C" is usually used to represent any one of the following: Only A exists; only B exists; only C exists; both A and B exist; both A and C exist; both B and C exist; and A, B, and C all exist. The foregoing uses three elements A, B, and C as an example to describe an optional item of the project. When there are more elements in the representation, a meaning of the representation may be obtained according to the foregoing rules.

For ease of describing the technical solutions in embodiments of this application, in embodiments of this application, words such as "first" and "second" may be used to distinguish between technical features with a same or similar function. The terms such as "first" and "second" do not limit a quantity or an execution sequence, and the terms such as "first" and "second" do not indicate a definite difference. In embodiments of this application, the word such as "example" or "for example" is used to represent an example, evidence, or a description. Any embodiment or design solution described as "example" or "for example" should not be explained as being more preferred or having more advantages than another embodiment or design solution. A word like "example" or "for example" is used to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a necessary determining action in an implementation, and do not mean any other limitation.

"Simultaneously" in this application may be understood as being at a same time point, may be understood as being within a time period, or may be understood as being within a same periodicity.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

It may be understood that, a same step or steps or technical features that have a same function in embodiments of this application may be mutually referenced in different embodiments.

It may be understood that, in embodiments of this application, the intelligent control apparatus and/or the vehicle control apparatus may perform a part or all of the steps in embodiments of this application. These steps are merely examples. In embodiments of this application, other steps or variations of various steps may be further performed. In addition, the steps may be performed in a sequence different from a sequence presented in embodiments of this application, and not all the steps in embodiments of this application may be necessarily performed.

FIG. 3 shows a travel parameter allocation method according to an embodiment of this application. In FIG. 3, an example in which an intelligent control apparatus and a vehicle control apparatus are used as execution bodies of the interaction example is used to illustrate the method. However, the execution bodies of the interaction example are not limited in this application. For example, the intelligent control apparatus in FIG. 3 may be a chip, a chip system, or a processor that supports the intelligent control apparatus in implementing the method, or may be a logic module or software that can implement all or a part of functions of the intelligent control apparatus. The vehicle control apparatus in FIG. 3 may be a chip, a chip system, or a processor that supports the vehicle control apparatus in implementing the method, or may be a logic module or software that can implement all or a part of functions of the vehicle control apparatus. The travel parameter allocation method may include the following steps.

S301: An intelligent control apparatus obtains a travel parameter.

The intelligent control apparatus may be the intelligent control apparatus 101 in FIG. 1A or the intelligent control apparatus in FIG. 1C.

In embodiments of this application, the travel parameter may include at least one of the following: torque, vehicle speed, wheel speed, vehicle acceleration, motor phase angle, vehicle distance, or wheel track. It may be understood that, during specific application, the travel parameter may further include another parameter, which is not limited.

It may be understood that the travel parameter may be represented based on an absolute value, or a value of the travel parameter may be a positive number, a negative number, or zero. This is not limited.

In a possible implementation, an intelligent driving module obtains the travel parameter. The intelligent driving module may be the intelligent driving module 1012 in FIG. 1B or the intelligent driving module in FIG. 1C.

For example, after an intelligent driving function is activated (for example, a driver presses or taps a button of the intelligent driving function), the intelligent driving module obtains sensing information (for example, information photographed by a camera and/or information sensed by various radars), performs fusion and planning based on the sensing information, to obtain a control requirement (for example, turning left, braking, or acceleration), and calculates the travel parameter based on the control requirement.

Optionally, the intelligent driving module sends the travel parameter to an MCU module. The MCU module may be the MCU module 1011 in FIG. 1B or the MCU module in FIG. 1C.

It may be understood that the intelligent driving module obtains the travel parameter in real time, and sends the travel parameter to the MCU module in real time. Alternatively, the intelligent driving module obtains the travel parameter in real time, and sends a latest obtained travel parameter to the MCU module in a case in which the travel parameter changes greatly within specific time. Alternatively, the intelligent driving module obtains the travel parameter in real time, and periodically sends a latest obtained travel parameter to the MCU module.

S302: The intelligent control apparatus determines a current driving scenario.

In embodiments of this application, the current driving scenario includes an intelligent driving scenario, an intelligent driving low-speed scenario, an intelligent driving non-low-speed scenario, a manual driving normal scenario, or a manual driving fault scenario.

In a possible implementation, when detecting that an intelligent driving mode is enabled, the intelligent control apparatus determines that the current driving scenario includes the intelligent driving scenario; or when detecting that an intelligent driving mode is enabled, and a vehicle speed is less than or equal to a first threshold, the intelligent control apparatus determines that the current driving scenario includes the intelligent driving low-speed scenario; or when detecting that an intelligent driving mode is enabled, and a vehicle speed is greater than a first threshold, the intelligent control apparatus determines that the current driving scenario includes the intelligent driving non-low-speed scenario; or when handshake detection between the intelligent control apparatus and the vehicle control apparatus is abnormal, the intelligent control apparatus determines that the current driving scenario includes the manual driving fault scenario; or when communication between the intelligent control apparatus and the vehicle control apparatus is interrupted, the intelligent control apparatus determines that the current driving scenario includes the manual driving fault scenario. The vehicle control apparatus may be the vehicle control apparatus 102 in FIG. 1A or the vehicle control apparatus in FIG. 1C.

For example, if the intelligent control apparatus detects that the button of the intelligent driving function is pressed or tapped, the intelligent control apparatus determines that the current driving scenario includes the intelligent driving scenario.

For example, if the intelligent control apparatus detects that the button of the intelligent driving function is pressed or tapped, and the intelligent driving apparatus detects that the vehicle speed of the vehicle in which the intelligent driving apparatus is located is less than or equal to the first threshold (for example, 40 km/h), the intelligent driving apparatus determines that the current driving scenario includes the intelligent driving low-speed scenario. The intelligent driving low-speed scenario has a high requirement (for example, a centimeter-level requirement) on motion displacement control of the vehicle in which the intelligent driving apparatus is located. For example, the intelligent driving low-speed scenario includes a parking scenario.

For example, if the intelligent control apparatus detects that the button of the intelligent driving function is pressed or tapped, and the intelligent driving apparatus detects that the vehicle speed of the vehicle in which the intelligent driving apparatus is located is greater than the first threshold (for example, 40 km/h), the intelligent driving apparatus determines that the current driving scenario includes the intelligent driving non-low-speed scenario.

For example, if the intelligent control apparatus and the vehicle control apparatus perform handshake detection by using mechanisms such as heartbeat detection or interactive response, and the handshake detection is abnormal, the intelligent control apparatus determines that the current driving scenario includes the manual driving fault scenario. It should be understood that the handshake detection in this embodiment of this application may be handshake detection with at least one channel. For example, the intelligent control apparatus performs handshake detection with the vehicle control apparatus in at least one of a CAN, a CANFD, a LIN, Sent, or an Ethernet by using the mechanisms such as heartbeat detection or interactive response.

For example, if both direct communication and indirect communication between the intelligent control apparatus and the vehicle control apparatus are interrupted (in other words, the intelligent control apparatus and the vehicle control apparatus cannot directly communicate or indirectly communicate with each other), the intelligent control apparatus determines that the current driving scenario includes the manual driving fault scenario.

It may be understood that the first threshold may be set based on a requirement, and is not limited.

In a possible implementation, the MCU module in the intelligent control apparatus determines the current driving scenario.

It may be understood that a sequence of performing S301 and S302 is not limited in this embodiment of this application. For example, S301 may be performed before S302, or S302 may be performed before S301, or S301 and S302 may be simultaneously performed.

S303: The intelligent control apparatus sends the travel parameter to a motor or the vehicle control apparatus based on the current driving scenario.

The motor may be the motor 103 in FIG. 1A or the at least one motor in FIG. 1C.

In a possible implementation, if the current driving scenario includes the intelligent driving scenario, the intelligent driving low-speed scenario, or the manual driving fault scenario, the intelligent control apparatus sends the travel parameter to the motor, and correspondingly, the motor receives the travel parameter. Alternatively, if the current driving scenario includes the intelligent driving non-low-speed scenario or the manual driving normal scenario, the intelligent control apparatus sends the travel parameter to the vehicle control apparatus, and correspondingly, the vehicle control apparatus receives the travel parameter.

It may be understood that the intelligent driving scenario or the intelligent driving low-speed scenario has a high requirement on vehicle displacement control precision. The intelligent control apparatus does not send the travel parameter to the motor via the vehicle control apparatus, but directly sends the travel parameter to the motor, so that response time of the motor can be reduced (at least 10 ms can be reduced). This implements high-precision vehicle displacement control.

It may be understood that, in the manual driving fault scenario, the vehicle control apparatus cannot work normally. Therefore, the intelligent driving apparatus may not send the travel parameter to the vehicle control apparatus, but send the travel parameter to the motor, so that the vehicle can travel normally.

It may be understood that the intelligent driving non-low-speed scenario (for example, including a highway adaptive cruise scenario) does not have a high requirement on vehicle displacement control precision, and does not have a high requirement on motor control precision either. The intelligent control apparatus may send the travel parameter to the motor via the vehicle control apparatus, so that the vehicle control apparatus centrally manages other functions of the vehicle, for example, at least one of a vehicle dynamics control function, a vehicle kinematics control function, a vehicle energy management function, a vehicle speed limitation function, or a power system capability limitation function.

It may be understood that, in the manual driving normal scenario, the intelligent control apparatus sends the travel parameter to the vehicle control apparatus, so that a basis can be provided for the vehicle control apparatus to calculate the travel parameter.

It may be understood that, if the current scenario includes the manual driving normal scenario, the intelligent control apparatus may also send the travel parameter to the motor, and the motor may determine whether to use the travel parameter sent by the intelligent control apparatus or the travel parameter sent by the vehicle control apparatus.

It may be understood that a device or a module that sends the travel parameter to the motor or the vehicle control apparatus may be the MCU module in the intelligent control apparatus.

The following separately describes in detail a case in which the intelligent control apparatus sends the travel parameter to the vehicle control apparatus and a case in which the intelligent control apparatus sends the travel parameter to the motor.

First, the case in which the intelligent control apparatus sends the travel parameter to the vehicle control apparatus is described.

In a possible implementation, when handshake detection between the intelligent control apparatus and the vehicle control apparatus is normal, the intelligent control apparatus sends the travel parameter to the vehicle control apparatus.

It may be understood that the intelligent control apparatus and the vehicle control apparatus may periodically perform handshake detection by using mechanisms such as heartbeat detection and/or interactive response, to detect whether the intelligent control apparatus and the vehicle control apparatus work normally. The intelligent control apparatus may send the travel parameter to the vehicle control apparatus when the vehicle control apparatus works normally, to ensure that the vehicle can travel normally.

In a possible implementation, when handshake detection with the vehicle control apparatus is abnormal, and handshake detection between the motor or a power apparatus and the vehicle control apparatus is normal, the intelligent control apparatus sends the travel parameter to the vehicle control apparatus. The power apparatus may be one or more nodes included in the power CAN node in FIG. 1C. In embodiments of this application, "a plurality of" may be understood as two or more. This is uniformly described herein, and details are not described below.

It may be understood that if the handshake detection between the intelligent control apparatus and the vehicle control apparatus is abnormal, it indicates that the intelligent control apparatus or the vehicle control apparatus is abnormal (or faulty), but the intelligent control apparatus cannot determine which apparatus is abnormal. Therefore, the intelligent control apparatus may further determine an abnormal apparatus by using another apparatus or module.

For example, if handshake detection between the motor and the intelligent control apparatus is normal, and the handshake detection between the motor and the vehicle control apparatus is abnormal, it indicates that the intelligent control apparatus is normal, and the vehicle control apparatus is abnormal. If the handshake detection between the motor and the intelligent control apparatus is abnormal, and the handshake detection between the motor and the vehicle control apparatus is normal, it indicates that the intelligent control apparatus is abnormal, and the vehicle control apparatus is normal. If the handshake detection between the motor and the intelligent control apparatus is normal, and the handshake detection between the motor and the vehicle control apparatus is also normal, it indicates that both the intelligent control apparatus and the vehicle control apparatus are normal, but a communication link between the intelligent control apparatus and the vehicle control apparatus is faulty. Similarly, the intelligent control apparatus may further determine, by using the power apparatus, whether the intelligent control apparatus and the vehicle control apparatus are normal.

It may be understood that if the handshake detection between the intelligent control apparatus and the vehicle control apparatus is abnormal, and the handshake detection between the motor or the power apparatus and the vehicle control apparatus is normal, it indicates that the vehicle control apparatus is normal. Therefore, the intelligent control apparatus may send the travel parameter to the vehicle control apparatus.

In a possible implementation, after performing handshake detection with the vehicle control apparatus by using mechanisms such as heartbeat detection and/or interactive response, the motor or the power apparatus sends a detection result to the intelligent control apparatus. Correspondingly, the intelligent control apparatus receives the detection result. The detection result indicates whether the handshake detection between the motor or the power apparatus and the vehicle control apparatus is normal. In this way, the intelligent control apparatus may further determine whether the vehicle control apparatus is normal, and send the travel parameter to the vehicle control apparatus when the vehicle control apparatus is normal.

It may be understood that, before S303, if the motor controls the vehicle to travel by using the travel parameter sent by the intelligent control apparatus, after determining to hand over vehicle control permission (or permission to allocate the travel parameter) to the vehicle control apparatus, the intelligent control apparatus may indicate the vehicle control apparatus to make preparations.

For example, before S303, the intelligent control apparatus sends first indication information to the vehicle control apparatus. Correspondingly, the vehicle control apparatus receives the first indication information. The first indication information may indicate to prepare to process the travel parameter. For example, the first indication information includes a flag bit indicating to prepare to process the travel parameter. In this way, the vehicle control apparatus may determine that the intelligent control apparatus is ready to hand over the vehicle control permission to the vehicle control apparatus, or may determine that the intelligent control apparatus is ready to exit the intelligent driving mode. This helps the intelligent control apparatus smoothly hand over the vehicle control permission to the vehicle control apparatus, to avoid that no apparatus allocates the travel parameter within a period of time, or avoid that a plurality of apparatuses allocate the travel parameter within a period of time, and the motor does not know which the travel parameter to adopt. This improves travel safety of the vehicle.

Optionally, after receiving the first indication information, the vehicle control apparatus sends response information of the first indication information to the intelligent control apparatus. Correspondingly, the intelligent control apparatus receives the response information, so that the intelligent control apparatus determines that the vehicle control apparatus receives the first indication information.

Optionally, the intelligent control apparatus sends first check information to the vehicle control apparatus. Correspondingly, after receiving the first check information, the vehicle control apparatus sends response information of the first check information to the intelligent control apparatus. Correspondingly, the intelligent control apparatus receives the response information of the first check information. The first check information may be used to check whether preparation is completed, and the response information of the first check information may indicate whether preparation is completed. In this way, the intelligent control apparatus may determine whether the vehicle control apparatus is ready to take over the control permission of the vehicle, and send the travel parameter to the vehicle control apparatus when the vehicle control apparatus completes preparation, to avoid handing over the control permission of the vehicle when the vehicle control apparatus is not ready. In this way, the vehicle control permission is smoothly taken over, and travel safety is ensured.

It may be understood that, after receiving the response information of the first check information, the intelligent control apparatus stops sending the travel parameter to the motor. After sending the response information of the first check information to the intelligent control apparatus, the vehicle control apparatus starts to send the travel parameter to the motor. In this case, the intelligent control apparatus hands over the vehicle control permission to the vehicle control apparatus, so that the vehicle control permission is smoothly taken over, and travel safety is ensured.

It may be understood that, after receiving the travel parameter, the vehicle control apparatus may send the travel parameter to the motor, so that the motor controls the vehicle to travel based on the travel parameter. Alternatively, after receiving the travel parameter, the vehicle control apparatus updates the travel parameter, and sends an updated travel parameter to the motor, so that the motor controls the vehicle to travel based on the updated travel parameter. When updating the travel parameter, the vehicle control apparatus may refer to the received travel parameter, or may not refer to the received travel parameter. To be specific, the updated travel parameter may be obtained based on the received travel parameter, or may not be obtained based on to the received travel parameter.

In a possible design, if a motor is configured in the vehicle, the vehicle control apparatus sends the travel parameter corresponding to the motor to the motor. After receiving the travel parameter, the motor controls the vehicle to travel based on the travel parameter.

In another possible design, if a plurality of motors are configured in the vehicle, the vehicle control apparatus sends, to each of the plurality of motors, a travel parameter corresponding to the motor. In other words, the vehicle control apparatus may allocate the travel parameter to each of the plurality of motors. After receiving the travel parameter of each motor, each motor controls travel of the vehicle based on the travel parameter. Alternatively, if a plurality of motors are configured in the vehicle, the vehicle control apparatus sends, to a first motor, a total travel parameter corresponding to the plurality of motors. After receiving the total travel parameter, the first motor may allocate, to each motor based on the total travel parameter, a travel parameter corresponding to each motor. In other words, the vehicle control apparatus does not allocate the travel parameter to each of the plurality of motors, but the first motor allocates the travel parameter. After receiving the travel parameter corresponding to each motor, each motor controls travel of the vehicle based on the travel parameter corresponding to the motor. The first motor is any one of the plurality of motors.

It may be understood that, in this embodiment of this application, a plurality of motors be configured in the vehicle, to implement decoupling between vehicle control (for example, the intelligent driving apparatus or the vehicle control apparatus) and vehicle execution (for example, the motor), eliminating strong dependency and compatibility constraints of the intelligent driving apparatus or the vehicle control apparatus on a single motor.

Optionally, when allocating the travel parameter, the vehicle control apparatus or the first motor may perform allocation with reference to at least one of current driving scenario, tire slip rate, vehicle yaw angular velocity, or vehicle centroid transfer.

Optionally, after controlling the vehicle based on the received travel parameter, the motor sends an actually executed travel parameter to the vehicle control apparatus. The actually executed travel parameter may be the same as or different from the travel parameter received by the motor.

In a possible design, the travel parameter sent by the intelligent control apparatus to the motor and the travel parameter sent by the vehicle control apparatus to the motor may be based on a same packet identifier. In other words, an identifier of a packet that is sent by the intelligent control apparatus to the motor and that includes the travel parameter is the same as an identifier of a packet that is sent by the vehicle control apparatus to the motor and that includes the travel parameter. In this way, the motor does not need to sense the apparatus that sends the travel parameter, thereby simplifying an operation of the motor.

In another possible design, the travel parameter sent by the intelligent control apparatus to the motor and the travel parameter sent by the vehicle control apparatus to the motor may be based on different packet identifiers. In other words, the identifier of the packet that is sent by the intelligent control apparatus to the motor and that includes the travel parameter is different from the identifier of the packet that is sent by the vehicle control apparatus to the motor and that includes the travel parameter. In this way, the motor may determine the apparatus that sends the travel parameter, and then use, based on a requirement, a proper apparatus to send the travel parameter.

It may be understood that the packet may be a CAN packet, a CANFD packet, an Ethernet packet, or the like. This is not limited.

The following describes a case in which the intelligent control apparatus sends the travel parameter to the motor.

In a possible implementation, when the handshake detection between the intelligent control apparatus and the vehicle control apparatus is normal, the intelligent control apparatus sends the travel parameter to the vehicle control apparatus.

In embodiments of this application, the intelligent control apparatus and the motor may periodically perform handshake detection by using the mechanisms such as the heartbeat detection and/or the interactive response, to detect whether the intelligent control apparatus and the motor work normally. The intelligent control apparatus may send the travel parameter to the motor when the motor works normally, so that the motor controls travel of the vehicle based on the travel parameter. Optionally, after controlling the vehicle based on the received travel parameter, the motor sends the actually executed travel parameter to the intelligent control apparatus. The actually executed travel parameter may be the same as or different from the travel parameter received by the motor.

In a possible design, if a motor is configured in the vehicle, the intelligent control apparatus sends a travel parameter corresponding to the motor to the motor. After receiving the travel parameter, the motor controls the vehicle to travel based on the travel parameter. In other words, the travel parameter sent by the intelligent control apparatus to the motor includes the travel parameter corresponding to the motor.

In another possible design, if a plurality of motors are configured in the vehicle, the intelligent control apparatus sends, to each of the plurality of motors, a travel parameter corresponding to the motor. In other words, the intelligent control apparatus may allocate a travel parameter to each of the plurality of motors, and the travel parameter sent by the intelligent control apparatus to the motor includes the travel parameter allocated to each of the plurality of motors. After receiving the travel parameter of each motor, each motor controls travel of the vehicle based on the travel parameter. Alternatively, if a plurality of motors are configured in the vehicle, the intelligent control apparatus sends, to a first motor, a total travel parameter corresponding to the plurality of motors. After receiving the total travel parameter, the first motor may allocate, to each motor based on the total travel parameter, a travel parameter corresponding to each motor. In other words, the intelligent control apparatus does not allocate the travel parameter to each of the plurality of motors, but the first motor allocates the travel parameter. After receiving the travel parameter corresponding to each motor, each motor controls travel of the vehicle based on the travel parameter corresponding to the motor. The first motor is any one of the plurality of motors.

Optionally, when allocating the travel parameter, the intelligent control apparatus or the first motor may perform allocation with reference to at least one of current driving scenario, tire slip rate, vehicle yaw angular velocity, or vehicle centroid transfer.

It may be understood that, when the plurality of motors are configured in the vehicle, and the intelligent control apparatus sends, to each of the plurality of motors, the travel parameter corresponding to the motor, the travel parameter corresponding to each motor may be calculated by the MCU module and sent to each motor, or is calculated by the intelligent driving module and sent to each motor via the MCU module. This is not limited.

It may be understood that, to improve stability of the vehicle in an emergency operation and comfort of a driver and a passenger, the intelligent control apparatus may collaboratively process the travel parameter, or indicate the motor to collaboratively process the travel parameter.

In a possible implementation, the travel parameter sent by the intelligent control apparatus to the motor is a parameter obtained through collaborative processing.

In another possible implementation, the intelligent control apparatus detects whether a collaborative processing function of the travel parameter is enabled, and sends second indication information to the motor when the collaborative processing function is enabled (for example, a button of the collaborative processing function is pressed or tapped). Correspondingly, the motor receives the second indication information. The second indication information may indicate to collaboratively process the travel parameter. The collaborative processing may include collaborative control in at least two directions of a lateral direction, a longitudinal direction, or a vertical direction. In this way, the motor can collaboratively process the travel parameter.

For example, the motor performs collaborative control in the longitudinal and vertical directions. In a process in which the vehicle travels at a high speed (control in the longitudinal direction), the motor synchronously increases a suspension height acceleration (control in the vertical direction), to improve vehicle body stability and further improve ride comfort.

For example, the motor performs collaborative control in the longitudinal and lateral directions. When the vehicle needs to make a sharp turn to the right in a traveling process (control in the longitudinal direction), the motor synchronously reduces an angular velocity of a right front wheel and increases an angular velocity of a left rear wheel, to improve body stability and further improve ride comfort.

It may be understood that if the current driving scenario includes the manual driving fault scenario, it indicates that the vehicle control apparatus is abnormal. In this case, the intelligent control apparatus may be used as a redundant apparatus of the vehicle control apparatus, and perform all or a part of operations of the vehicle control apparatus, so that the vehicle can normally travel in the manual driving fault scenario, thereby ensuring travel safety of the vehicle. In other words, the intelligent control apparatus has all or the part of the functions of the vehicle control apparatus, and can smoothly take over the vehicle control permission.

In a possible design, the intelligent control apparatus is connected to a throttle signal and a braking signal, and the intelligent control apparatus has all the functions of the vehicle control apparatus. Alternatively, the intelligent control apparatus is not connected to a throttle signal and a braking signal, and the intelligent control apparatus has the part of the functions of the vehicle control apparatus.

For example, if the intelligent control apparatus is connected to the throttle signal and the braking signal, the intelligent control apparatus has at least one of the following functions: a travel parameter calculation function in a manual driving scenario, a travel parameter transition and takeover function upon exiting of the intelligent driving scenario, a multi-motor travel parameter allocation and control function, a multi-direction collaborative control function, a vehicle driving capability limitation protection function, a vehicle mode management and matching function, a function of handshake detection with the intelligent driving apparatus, a function of switching with the intelligent driving apparatus to control a vehicle, a function of handshake detection with at least one motor, or a function of handshake detection with the power CAN node. If the intelligent control apparatus is not connected to the throttle signal and the braking signal, the intelligent control apparatus has at least one of the following functions: the travel parameter calculation function in the manual driving scenario, the multi-motor travel parameter allocation and control function, the vehicle driving capability limitation protection function, the vehicle mode management and matching function, the function of handshake detection with the intelligent driving apparatus, the function of switching with the intelligent driving apparatus to control the vehicle, the function of handshake detection with at least one motor, or the function of handshake detection with the power CAN node.

In a possible design, the intelligent control apparatus and the vehicle control apparatus may use a same software architecture, so that software architectures are normalized, and the intelligent control apparatus is used as a redundant apparatus of the vehicle control apparatus, thereby ensuring safe travel of the vehicle.

The actions of the intelligent control apparatus or the vehicle control apparatus in S301 to S303 may be performed by the processor 201 in the vehicle-mounted device 20 shown in FIG. 2 by invoking the application program code stored in the memory 203. This is not limited in this embodiment of this application.

Based on the method in FIG. 3, the intelligent control apparatus may obtain the travel parameter, determine the current driving scenario, and allocate the travel parameter based on the current driving scenario, thereby enriching working modes between the intelligent control apparatus, the vehicle control apparatus, and the motor. In this way, a final manner of allocating the travel parameter is applicable to the current driving scenario.

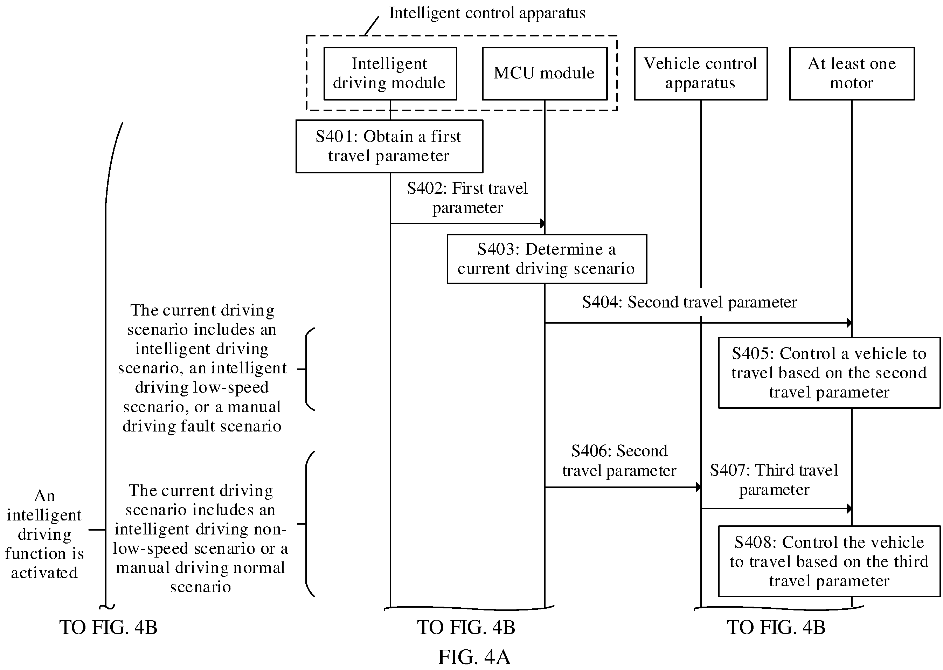

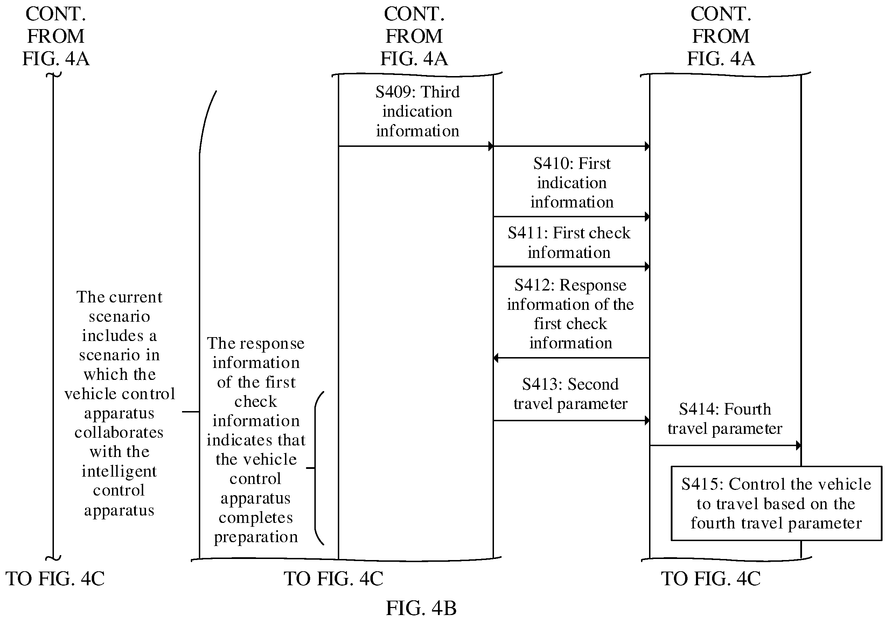

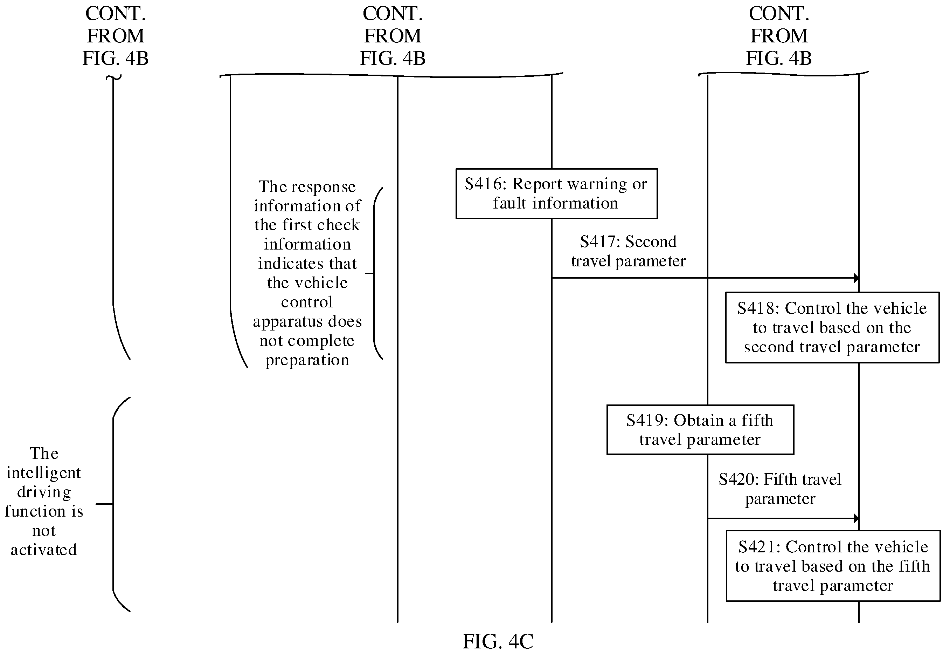

To facilitate understanding of the travel parameter allocation method provided in embodiments of this application, the following uses the method shown in FIG. 4A to FIG. 4C as an example to describe a complete procedure of the travel parameter allocation method provided in embodiments of this application. It should be understood that explanations and descriptions of steps and features in the method shown in FIG. 3 are all applicable to the method shown in FIG. 4A to FIG. 4C, and explanations and descriptions of steps and features in the method shown in FIG. 4A to FIG. 4C are also applicable to the method shown in FIG. 3.

FIG. 4A to FIG. 4C show another travel parameter allocation method according to an embodiment of this application. In FIG. 4A to FIG. 4C, an example in which an intelligent driving module, an MCU module, and a vehicle control apparatus are used as execution bodies of the interaction example is used to illustrate the method. However, the execution bodies of the interaction example are not limited in this application. For example, the intelligent driving module in FIG. 4A to FIG. 4C may alternatively be a chip, a chip system, or a processor that supports the intelligent driving module in implementing the method, or may be a logical module or software that can implement all or a part of functions of the intelligent driving module. The MCU module in FIG. 4A to FIG. 4C may alternatively be a chip, a chip system, or a processor that supports the MCU module in implementing the method, or may be a logical module or software that can implement all or part of functions of the MCU module. The vehicle control apparatus in FIG. 4A to FIG. 4C may alternatively be a chip, a chip system, or a processor that supports the vehicle control apparatus in implementing the method, or may be a logical module or software that can implement all or part of functions of the vehicle control apparatus. The travel parameter allocation method may include the following steps.

It may be understood that, if an intelligent driving function is activated, S401 to S418 are performed; or if the intelligent driving function is not activated, S419 to S421 are performed.

S401: The intelligent driving module obtains a first travel parameter.

The intelligent driving module may be the intelligent driving module in FIG. 1C.

S402: The intelligent driving module sends the first travel parameter to the MCU module. Correspondingly, the MCU module receives the first travel parameter.

The MCU module may be the MCU module in FIG. 1C.

S403: The MCU module determines a current driving scenario.

If a current driving scenario includes an intelligent driving scenario, an intelligent driving low-speed scenario, or a manual driving fault scenario, S404 and S405 are performed. If the current driving scenario includes an intelligent driving non-low-speed scenario or a manual driving normal scenario, S406 and S408 are performed. If the current scenario includes a scenario in which the vehicle control apparatus collaborates with the intelligent control apparatus, S409 to S418 are performed.

The scenario in which the vehicle control apparatus collaborates with the intelligent control apparatus may be understood as a scenario in which the intelligent control apparatus hands over vehicle control permission to the vehicle control apparatus after the intelligent driving function is activated, or a scenario in which the vehicle control apparatus hands over the vehicle control permission to the intelligent control apparatus after the intelligent driving function is activated in the manual driving normal scenario. S409 to S418 are described by using an example in which the intelligent control apparatus transfers the vehicle control permission to the vehicle control apparatus. A case in which the vehicle control apparatus hands over the vehicle control permission to the intelligent control apparatus is similar to a case in which the intelligent control apparatus hands over the vehicle control permission to the vehicle control apparatus. For details, refer to corresponding descriptions in S409 to S418. Details are not described again.

S404: The MCU module sends a second travel parameter to at least one motor. Correspondingly, the at least one motor receives the second travel parameter.

The at least one motor may be the at least one motor in FIG. 1C. The second travel parameter is the same as the first travel parameter, or the second travel parameter is different from the first travel parameter.

In a possible implementation, the second travel parameter is obtained based on the first travel parameter.

In an example, the first travel parameter includes a total travel parameter corresponding to a plurality of motors, and the second travel parameter includes a travel parameter corresponding to each of the plurality of motors.

In another example, when detecting that a collaborative processing function of the travel parameter is enabled, the MCU module collaboratively processes the first travel parameter to obtain the second travel parameter, and sends the second travel parameter to the at least one motor. In this way, the at least one motor performs collaborative controls in at least two directions of a lateral direction, a longitudinal direction, or a vertical direction based on the second travel parameter, thereby improving stability of a vehicle and comfort of a driver and a passenger. It may be understood that when detecting that the collaborative processing function of the travel parameter is not enabled, the MCU module sends the first travel parameter to the at least one motor.

S405: The at least one motor controls the vehicle to travel based on the second travel parameter.

It may be understood that after S405, if the current driving scenario includes the intelligent driving scenario, the intelligent driving low-speed scenario, or the manual driving fault scenario, S404 and S405 are performed. If the current driving scenario includes the intelligent driving non-low-speed scenario or the manual driving normal scenario, S406 and S408 are performed. If the current scenario includes the scenario in which the vehicle control apparatus collaborates with the intelligent control apparatus, S409 to S418 are performed. A difference lies in that the second travel parameter in S404, S406, S413, or S417 is a latest travel parameter obtained by the MCU module.

S406: The MCU module sends the second travel parameter to the vehicle control apparatus. Correspondingly, the vehicle control apparatus receives the second travel parameter.

The vehicle control apparatus may be the vehicle control apparatus in FIG. 1C. The second travel parameter is the same as the first travel parameter, or the second travel parameter is different from the first travel parameter.

In a possible implementation, the second travel parameter is obtained based on the first travel parameter.

In an example, the first travel parameter includes the total travel parameter corresponding to the plurality of motors, and the second travel parameter includes the travel parameter corresponding to each of the plurality of motors.

In another example, when detecting that the collaborative processing function of the travel parameter is enabled, the MCU module collaboratively processes the first travel parameter to obtain the second travel parameter, and sends the second travel parameter to the vehicle control apparatus. Subsequently, the vehicle control apparatus may send the second travel parameter to the at least one motor, so that the at least one motor performs collaborative controls in at least two directions of the lateral direction, the longitudinal direction, or the vertical direction based on the second travel parameter, thereby improving stability of the vehicle and comfort of the driver and the passenger. It may be understood that when detecting that the collaborative processing function of the travel parameter is not enabled, the MCU module sends the first travel parameter to the vehicle control apparatus.

S407: The vehicle control apparatus sends a third travel parameter to the at least one motor. Correspondingly, the at least one motor receives the third travel parameter.

The third travel parameter is the same as or different from the second travel parameter. In other words, the vehicle control apparatus may directly send the second travel parameter to the at least one motor without processing the second travel parameter, or the vehicle control apparatus obtains the third travel parameter based on the second travel parameter, and sends the third travel parameter to the at least one motor. For example, the second travel parameter includes the total travel parameter corresponding to the plurality of motors, and the third travel parameter includes the travel parameter corresponding to each of the plurality of motors.

S408: The at least one motor controls the vehicle to travel based on the third travel parameter.

It may be understood that after S408, if the current driving scenario includes the intelligent driving scenario, the intelligent driving low-speed scenario, or the manual driving fault scenario, S404 and S405 are performed. If the current driving scenario includes the intelligent driving non-low-speed scenario or the manual driving normal scenario, S406 and S408 are performed. If the current scenario includes the scenario in which the vehicle control apparatus collaborates with the intelligent control apparatus, S409 to S418 are performed. A difference lies in that the second travel parameter in S404, S406, S413, or S417 is a latest travel parameter obtained by the MCU module.

S409: The intelligent driving module sends third indication information to the MCU module and the vehicle control apparatus. Correspondingly, the MCU module and the vehicle control apparatus receive the third indication information.

The third indication information may indicate that the intelligent driving function is disabled.

S410: The MCU module sends first indication information to the vehicle control apparatus. Correspondingly, the vehicle control apparatus receives the first indication information.

It may be understood that, when handshake detection between the intelligent control apparatus and the vehicle control apparatus is normal, or when handshake detection between the intelligent control apparatus and the vehicle control apparatus is abnormal, and handshake detection between the motor or the power apparatus and the vehicle control apparatus is normal, the MCU module sends the first indication information to the vehicle control apparatus. The first indication information may indicate to prepare to process the travel parameter.

Optionally, after receiving the first indication information, the vehicle control apparatus sends response information of the first indication information to the MCU module. Correspondingly, the MCU module receives the response information, so that the MCU module determines that the vehicle control apparatus receives the first indication information.

S411: The MCU module sends first check information to the vehicle control apparatus. Correspondingly, the vehicle control apparatus receives the first check information.

For example, after S410, the MCU module sends the first check information to the vehicle control apparatus after waiting for a period of time (for example, 10 ms). The first check information may be used to check whether the vehicle control apparatus completes preparation.

S412: The vehicle control apparatus sends response information of the first check information to the MCU module. Correspondingly, the MCU module receives the response information of the first check information.

The response information of the first check information may indicate whether the vehicle control apparatus completes preparation.

It may be understood that, if the response information of the first check information indicates that the vehicle control apparatus completes preparation, the MCU module stops sending the travel parameter to the at least one motor, and the vehicle control apparatus starts to send the travel parameter to the at least one motor. For details, refer to the following descriptions in S413 to S415.

It may be understood that, if the response information of the first check information indicates that the vehicle control apparatus does not complete preparation, or the MCU module does not receive the response information of the first check information, the MCU module sends the first check information to the vehicle control apparatus again. After the MCU module attempts to send the first check information for N times, if the vehicle control apparatus still does not complete preparation, or the MCU module still does not receive the response information of the first check information, the MCU module reports warning or fault information, and continues to control the vehicle to complete at least a current driving cycle. In this case, the MCU module has all or a part of functions of the vehicle control apparatus. N may be set based on a requirement. The current driving cycle may be understood as a cycle from a moment at which the MCU module sends the travel parameter to the at least one motor to a moment at which the at least one motor controls the vehicle to travel based on the travel parameter. For details, refer to the following descriptions in S416 to S418.

S413: When the response information of the first check information indicates that the vehicle control apparatus completes preparation, the MCU module sends the second travel parameter to the vehicle control apparatus. Correspondingly, the vehicle control apparatus receives the second travel parameter.

S414: The vehicle control apparatus sends a fourth travel parameter to the at least one motor. Correspondingly, the at least one motor receives the third travel parameter.

S415: The at least one motor controls the vehicle to travel based on the fourth travel parameter.

For descriptions of S413 to S415, refer to corresponding descriptions in S406 to S408. Details are not described herein again.

S416: The MCU module reports the warning or the fault information.

For example, the MCU module reports the warning or the fault information to at least one of the following apparatuses or modules: an instrument cluster module (instrument cluster module, ICM), a dashboard, an intelligent cockpit domain controller (cockpit domain controller, CDC), a human machine interface (human machine interface, HMI), or an in-vehicle infotainment (in-vehicle infotainment, IVI) system.

S417: The MCU module sends the second travel parameter to the at least one motor. Correspondingly, the at least one motor receives the second travel parameter.

In a possible design, the intelligent control apparatus is connected to a throttle signal and a braking signal, and the MCU module has all the functions of the vehicle control apparatus. Alternatively, the intelligent control apparatus is not connected to a throttle signal and a braking signal, and the MCU module has the part of the functions of the vehicle control apparatus.

S418: The at least one motor controls the vehicle to travel based on the second travel parameter.

It may be understood that after S418, if the current driving scenario includes the intelligent driving scenario, the intelligent driving low-speed scenario, or the manual driving fault scenario, S404 and S405 are performed. If the current driving scenario includes the intelligent driving non-low-speed scenario or the manual driving normal scenario, S406 and S408 are performed. If the current scenario includes the scenario in which the vehicle control apparatus collaborates with the intelligent control apparatus, S409 to S418 are performed. A difference lies in that the second travel parameter in S404, S406, S413, or S417 is a latest travel parameter obtained by the MCU module.

S419: The vehicle control apparatus obtains a fifth travel parameter.

For example, the vehicle control apparatus obtains the fifth travel parameter through calculation by identifying and determining various driving requests (for example, stepping on a brake, stepping on an accelerator pedal, releasing the brake, releasing the accelerator pedal, switching a gear, or taking steering) of the driver.

S420: The vehicle control apparatus sends the fifth travel parameter to the at least one motor. Correspondingly, the at least one motor receives the fifth travel parameter.

S421: The at least one motor controls the vehicle to travel based on the fifth travel parameter.

It may be understood that after S421, if the intelligent driving function is activated, S401 to S418 are performed; or if the intelligent driving function is not activated, S419 to S421 are performed.

The actions of the intelligent driving module, the MCU module, or the vehicle control apparatus in S401 to S421 may be performed by the processor 201 in the vehicle-mounted device 20 shown in FIG. 2 by invoking the application program code stored in the memory 203. This is not limited in this embodiment of this application.

Based on the method shown in FIG. 4A to FIG. 4C, when the intelligent driving function is activated, the intelligent driving module may obtain the first travel parameter, and send the first travel parameter to the MCU module. The MCU module may determine the current driving scenario, and allocate the travel parameter based on the current driving scenario, thereby enriching working modes between the intelligent driving module, the MCU module, the vehicle control apparatus, and the motor, so that a final manner of allocating the travel parameter is applicable to the current driving scenario. When the intelligent driving function is not activated, the vehicle control apparatus may obtain the fifth travel parameter, and send the fifth travel parameter to the at least one motor, to ensure normal travel of the vehicle.

Embodiments mentioned above in this application may be combined when the solutions do not conflict. This is not limited.

The foregoing mainly describes the solutions provided in embodiments of this application from a perspective of interaction between apparatuses. Correspondingly, an embodiment of this application further provides a vehicle-mounted device. The vehicle-mounted device may be the intelligent control apparatus in the foregoing method embodiments, or an apparatus including the foregoing intelligent control apparatus, or a component that can be used in the intelligent control apparatus. Alternatively, the vehicle-mounted device may be the vehicle control apparatus in the foregoing method embodiment, or an apparatus including the vehicle control apparatus, or a component that can be used in the vehicle control apparatus. It may be understood that, to implement the foregoing functions, the intelligent control apparatus or the vehicle control apparatus includes a corresponding hardware structure and/or software module for performing each function. A person skilled in the art should easily be aware that, in combination with units and algorithm operations of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each specific application. However, it should not be considered that the implementation goes beyond the scope of this application.

In embodiments of this application, the intelligent control apparatus or the vehicle control apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of software functional module. It should be understood that, in embodiments of this application, module division is an example, and is merely a logical function division. In actual implementation, another division manner may be used.

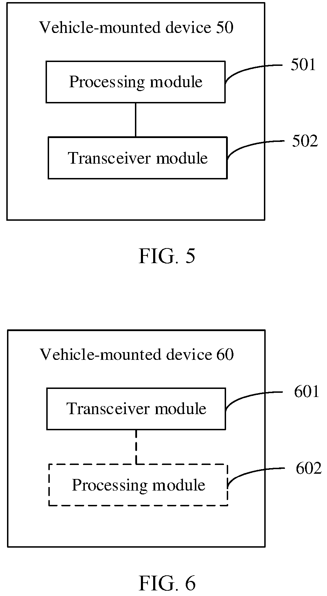

For example, when the functional modules are divided through integration, FIG. 5 is a diagram of a structure of a vehicle-mounted device 50. The vehicle-mounted device 50 includes a processing module 501 and a transceiver module 502. The processing module 501 may also be referred to as a processing unit, and is configured to perform an operation other than a transceiver operation. For example, the processing module 501 may be a processing circuit or a processor. The transceiver module 502 may also be referred to as a transceiver unit, and is configured to perform a transceiver operation. For example, the transceiver module 502 may be a transceiver circuit, a transceiver machine, a transceiver, or a communication interface.

In some embodiments, the vehicle-mounted device 50 may further include a storage module (not shown in FIG. 5), configured to store program instructions and data.

For example, the vehicle-mounted device 50 is configured to implement a function of the intelligent control apparatus. The vehicle-mounted device 50 is, for example, the intelligent control apparatus in the embodiment shown in FIG. 3, or the intelligent driving module and the MCU module in the embodiment shown in FIG. 4A to FIG. 4C.

The processing module 501 is configured to obtain a travel parameter. For example, the processing module 501 may be configured to perform S301.

The processing module 501 is further configured to determine a current driving scenario. The current driving scenario includes an intelligent driving scenario, an intelligent driving low-speed scenario, an intelligent driving non-low-speed scenario, a manual driving normal scenario, or a manual driving fault scenario. For example, the processing module 501 is further configured to perform S302.

The transceiver module 502 is configured to send the travel parameter to a motor or a vehicle control apparatus based on the current driving scenario. For example, the transceiver module 502 may be configured to perform S303.

In a possible implementation, the processing module 501 is specifically configured to: when detecting that an intelligent driving mode is enabled, determine that the current driving scenario includes the intelligent driving scenario; or when detecting that an intelligent driving mode is enabled and a vehicle speed is less than or equal to a first threshold, determine that the current driving scenario includes the intelligent driving low-speed scenario; or when detecting that an intelligent driving mode is enabled and a vehicle speed is greater than a first threshold, determine that the current driving scenario includes the intelligent driving non-low-speed scenario; or when handshake detection with the vehicle control apparatus is abnormal or communication with the vehicle control apparatus is interrupted, determine that the current driving scenario includes the manual driving fault scenario.

In a possible implementation, the transceiver module 502 is specifically configured to: when the current driving scenario includes the intelligent driving scenario, the intelligent driving low-speed scenario, or the manual driving fault scenario, send the travel parameter to the motor; or when the current driving scenario includes the intelligent driving non-low-speed scenario or the manual driving normal scenario, send the travel parameter to the vehicle control apparatus.

In a possible implementation, the transceiver module 502 is further specifically configured to: when the handshake detection between the intelligent control apparatus and the vehicle control apparatus is normal, send the travel parameter to the vehicle control apparatus.

In a possible implementation, the transceiver module 502 is further specifically configured to: when handshake detection with the vehicle control apparatus is abnormal, and handshake detection between the motor or a power apparatus and the vehicle control apparatus is normal, send the travel parameter to the vehicle control apparatus.

In a possible implementation, the transceiver module 502 is further configured to receive a detection result from the motor or the power apparatus, where the detection result indicates whether the handshake detection between the motor or the power apparatus and the vehicle control apparatus is normal.

In a possible implementation, the transceiver module 502 is further configured to: send first indication information to the vehicle control apparatus, where the first indication information indicates to prepare to process the travel parameter.

In a possible implementation, the transceiver module 502 is further configured to: send first check information to the vehicle control apparatus, where the first check information is used to check whether preparation is completed. The transceiver module 502 is further configured to receive response information of the first check information from the vehicle control apparatus, where the response information indicates that preparation is completed.

In a possible implementation, the current driving scenario includes the manual driving fault scenario, and the vehicle-mounted device 50 has all or a part of functions of the vehicle control apparatus.

In a possible design, the vehicle-mounted device 50 is connected to a throttle signal and a braking signal, and the vehicle-mounted device 50 has all the functions of the vehicle control apparatus. Alternatively, the vehicle-mounted device 50 is not connected to a throttle signal and a braking signal, and the vehicle-mounted device 50 has the part of the functions of the vehicle control apparatus.

In a possible implementation, the processing module 501 is further configured to detect whether a collaborative processing function of the travel parameter is enabled; and the transceiver module 502 is further configured to: when the collaborative processing function is enabled, send second indication information to the motor, where the second indication information indicates to collaboratively process the travel parameter.

In a possible implementation, the travel parameter includes at least one of the following: torque, vehicle speed, wheel speed, vehicle acceleration, motor phase angle, vehicle distance, or wheel track.

In a possible implementation, the vehicle control apparatus is a vehicle control unit, a vehicle control domain controller, a hybrid power control unit, or a multi-domain controller.

When the vehicle-mounted device 50 is configured to implement functions of the intelligent control apparatus, for other functions that can be implemented by the vehicle-mounted device 50, refer to related descriptions of the embodiment shown in FIG. 3 or the method embodiment shown in FIG. 4A to FIG. 4C. Details are not described again.

In a simple embodiment, a person skilled in the art may figure out that the vehicle-mounted device 50 may be in the form shown in FIG. 2. For example, the processor 201 in FIG. 2 may invoke the computer executable instructions stored in the memory 203, so that the vehicle-mounted device 50 performs the method in the foregoing method embodiments.

For example, functions/implementation processes of the processing module 501 and the transceiver module 502 in FIG. 5 may be implemented by the processor 201 in FIG. 2 by invoking the computer-executable instructions stored in the memory 203. Alternatively, functions/implementation processes of the processing module 501 in FIG. 5 may be implemented by the processor 201 in FIG. 2 by invoking the computer-executable instructions stored in the memory 203, and functions/implementation processes of the transceiver module 502 in FIG. 5 may be implemented by the communication interface 204 in FIG. 2.

For example, when the functional modules are divided through integration, FIG. 6 is a diagram of a structure of a vehicle-mounted device 60. The vehicle-mounted device 60 includes a transceiver module 601. Optionally, the vehicle-mounted device 60 further includes a processing module 602. The transceiver module 601 may also be referred to as a transceiver unit, and is configured to perform a transceiver operation. For example, the transceiver module 601 may be a transceiver circuit, a transceiver machine, a transceiver, or a communication interface. The processing module 602 may also be referred to as a processing unit, and is configured to perform an operation other than a transceiver operation. For example, the processing module 602 may be a processing circuit or a processor.

In some embodiments, the vehicle-mounted device 60 may further include a storage module (not shown in FIG. 6), configured to store program instructions and data.

For example, the vehicle-mounted device 60 is configured to implement a function of the vehicle control apparatus. The vehicle-mounted device 60 is, for example, the vehicle control apparatus in the embodiment shown in FIG. 3 or the embodiment shown in FIG. 4A to FIG. 4C.

The transceiver module 601 is configured to receive first indication information from an intelligent control apparatus. The first indication information indicates to prepare to process the travel parameter. For example, the transceiver module 601 may be configured to perform S410.

The transceiver module 601 is further configured to receive a first travel parameter from the intelligent control apparatus. For example, the transceiver module 601 may be configured to perform S413.

The transceiver module 601 is further configured to send a second travel parameter to a motor. The second travel parameter is obtained based on the first travel parameter. For example, the transceiver module 601 may be configured to perform S414.

In a possible implementation, the transceiver module 601 is further configured to receive first check information from the intelligent control apparatus, where the first check information is used to check whether preparation is completed. The transceiver module 601 is further configured to send response information of the first check information to the intelligent control apparatus, where the response information indicates that preparation is completed.

In a possible implementation, the processing module 602 is configured to determine that handshake detection with the intelligent control apparatus is normal; or the processing module 602 is configured to determine that handshake detection with the intelligent control apparatus is abnormal, but handshake detection with the motor or a power apparatus is normal.

In a possible implementation, the first travel parameter includes at least one of the following: torque, vehicle speed, wheel speed, vehicle acceleration, motor phase angle, vehicle distance, or wheel track.

In a possible implementation, the intelligent control apparatus is an autonomous driving system, an advanced assisted driving system, a multi-domain controller, an autonomous driving control unit, or a high-performance computing center.

When the vehicle-mounted device 60 is configured to implement functions of the vehicle control apparatus, for other functions that can be implemented by the vehicle-mounted device 60, refer to related descriptions of the embodiment shown in FIG. 3 or the method embodiment shown in FIG. 4A to FIG. 4C. Details are not described again.

In a simple embodiment, a person skilled in the art may figure out that the vehicle-mounted device 60 may be in the form shown in FIG. 2. For example, the processor 201 in FIG. 2 may invoke the computer executable instructions stored in the memory 203, so that the vehicle-mounted device 60 performs the method in the foregoing method embodiments.

For example, functions/implementation processes of the transceiver module 601 and the processing module 602 in FIG. 6 may be implemented by the processor 201 in FIG. 2 by invoking the computer-executable instructions stored in the memory 203. Alternatively, functions/implementation processes of the processing module 602 in FIG. 6 may be implemented by the processor 201 in FIG. 2 by invoking the computer-executable instructions stored in the memory 203, and functions/implementation processes of the transceiver module 601 in FIG. 6 may be implemented by the communication interface 204 in FIG. 2.

It should be understood that one or more of the foregoing modules or units may be implemented by using software, hardware, or a combination of software and hardware. When any one of the foregoing modules or units is implemented by using software, the software exists in a form of computer program instructions and is stored in a memory, and a processor may be configured to execute the program instructions to implement the foregoing method procedures. The processor may be built into a SoC (system-on-a-chip) or an ASIC, or may be an independent semiconductor chip. In addition to a core that is used to execute software instructions to perform an operation or processing, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, an MCU, an artificial intelligence processor, an ASIC, a SoC, an FPGA, a PLD, a dedicated digital circuit, a hardware accelerator, or a non-integrated discrete device, and may run necessary software or may perform the foregoing method procedures without relying on software.

Optionally, an embodiment of this application further provides a chip system, including at least one processor and an interface. The at least one processor is coupled to a memory through the interface, and when the at least one processor executes a computer program or instructions in the memory, the method in any one of the foregoing method embodiments is performed. In a possible implementation, the chip system further includes a memory. Optionally, the chip system may include a chip, or may include a chip and another discrete component. This is not specifically limited in this embodiment of this application.

Optionally, an embodiment of this application further provides a computer-readable storage medium. All or a part of procedures in the foregoing method embodiments may be completed by a computer program instructing related hardware. The program may be stored in the foregoing computer-readable storage medium. When the program is executed, the procedures of the foregoing method embodiments may be included. The computer-readable storage medium may be an internal storage unit of the vehicle-mounted device in any one of the foregoing embodiments, for example, a hard disk or a memory of the vehicle-mounted device. The computer-readable storage medium may alternatively be an external storage device of the vehicle-mounted device, for example, a plug-in hard disk, a smart media card (smart media card, SMC), a secure digital (secure digital, SD) card, or a flash card (flash card) that is configured on the vehicle-mounted device. Further, the computer-readable storage medium may include both the internal storage unit and the external storage device of the vehicle-mounted device. The computer-readable storage medium is configured to store the computer program and other programs and data required by the vehicle-mounted device. The computer-readable storage medium may be further configured to temporarily store data that has been output or is to be output.

Optionally, an embodiment of this application further provides a computer program product. All or a part of procedures in the foregoing method embodiments may be completed by a computer program instructing related hardware. The program may be stored in the computer program product. When the program is executed, the procedures of the foregoing method embodiments may be included.

Optionally, an embodiment of this application further provides computer instructions. All or a part of the procedures of the foregoing method embodiments may be implemented by the computer instructions instructing related hardware (such as a computer, a processor, an access network device, a mobility management network element, or a session management network element). The program may be stored in the computer-readable storage medium or the computer program product.

Optionally, an embodiment of this application further provides an intelligent driving vehicle, including the intelligent control apparatus and/or the vehicle control apparatus in the foregoing embodiments.

Optionally, an embodiment of this application further provides a vehicle-mounted system, including the intelligent control apparatus and the vehicle control apparatus in the foregoing embodiments.

The foregoing descriptions about implementations allow a person skilled in the art to clearly understand that, for the purpose of convenient and brief description, division of the foregoing functional modules is used as an example for illustration. In actual application, the foregoing functions can be allocated to different functional modules and implemented based on a requirement, that is, an inner structure of an apparatus is divided into different functional modules to implement all or a part of the functions described above.

In the several embodiments provided in this application, it should be understood that the disclosed apparatus and method may be implemented in other manners. For example, the described apparatus embodiments are merely examples. For example, division into the modules or units is merely logical function division, and may be other division during actual implementation. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, that is, may be located in one place, or may be distributed in different places. Some or a part of the units may be selected based on an actual requirement to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A travel parameter allocation method, wherein the method comprises:
obtaining a travel parameter;
determining a current driving scenario, wherein the current driving scenario comprises an intelligent driving scenario, an intelligent driving low-speed scenario, an intelligent driving non-low-speed scenario, a manual driving normal scenario, or a manual driving fault scenario; and
sending the travel parameter to a motor or a vehicle control apparatus based on the current driving scenario.

2. The method according to claim **1,** wherein determining the current driving scenario comprises:
when detecting that an intelligent driving mode is enabled, determining that the current driving scenario comprises the intelligent driving scenario; or
when detecting that an intelligent driving mode is enabled and a vehicle speed is less than or equal to a first threshold, determining that the current driving scenario comprises the intelligent driving low-speed scenario; or
when detecting that an intelligent driving mode is enabled and a vehicle speed is greater than a first threshold, determining that the current driving scenario comprises the intelligent driving non-low-speed scenario; or
when handshake detection with the vehicle control apparatus is abnormal or communication with the vehicle control apparatus is interrupted, determining that the current driving scenario comprises the manual driving fault scenario.

3. The method according to claim 1 or 2, wherein sending the travel parameter to the motor or the vehicle control apparatus based on the current driving scenario comprises:
when the current driving scenario comprises the intelligent driving scenario, the intelligent driving low-speed scenario, or the manual driving fault scenario, sending the travel parameter to the motor; or
when the current driving scenario comprises the intelligent driving non-low-speed scenario or the manual driving normal scenario, sending the travel parameter to the vehicle control apparatus.

4. The method according to claim 3, wherein sending the travel parameter to the vehicle control apparatus comprises:
when handshake detection with the vehicle control apparatus is normal, sending the travel parameter to the vehicle control apparatus.

5. The method according to claim 3, wherein sending the travel parameter to the vehicle control apparatus comprises:
when handshake detection with the vehicle control apparatus is abnormal, and handshake detection between the motor or a power apparatus and the vehicle control apparatus is normal, sending the travel parameter to the vehicle control apparatus.

6. The method according to claim 5, wherein the method further comprises:
receiving a detection result from the motor or the power apparatus, wherein the detection result indicates whether the handshake detection between the motor or the power apparatus and the vehicle control apparatus is normal.

7. The method according to any one of claims 3 to 6, wherein before sending the travel parameter to the vehicle control apparatus, the method further comprises:
sending first indication information to the vehicle control apparatus, wherein the first indication information indicates to prepare to process the travel parameter.

8. The method according to claim 7, wherein before sending the travel parameter to the vehicle control apparatus, the method further comprises:
sending first check information to the vehicle control apparatus, wherein the first check information is used to check whether preparation is completed; and
receiving response information of the first check information from the vehicle control apparatus, wherein the response information indicates that preparation is completed.

9. The method according to any one of claims 1 to 3, wherein the method is applied to an intelligent control apparatus, the current driving scenario comprises the manual driving fault scenario, and the intelligent control apparatus has all or a part of functions of the vehicle control apparatus.

10. The method according to claim 9, wherein
the intelligent control apparatus is connected to a throttle signal and a braking signal, and the intelligent control apparatus has all the functions of the vehicle control apparatus; or
the intelligent control apparatus is not connected to a throttle signal and a braking signal, and the intelligent control apparatus has the part of the functions of the vehicle control apparatus.

11. The method according to any one of claims 1 to 3, wherein the method further comprises:
detecting whether a collaborative processing function of the travel parameter is enabled; and
when the collaborative processing function is enabled, sending second indication information to the motor, wherein the second indication information indicates to collaboratively process the travel parameter.

12. The method according to any one of claims 1 to 11, wherein the travel parameter comprises at least one of the following: torque, vehicle speed, wheel speed, vehicle acceleration, motor phase angle, vehicle distance, or wheel track.

13. The method according to any one of claims 1 to 12, wherein the vehicle control apparatus is a vehicle control unit, a vehicle control domain controller, a hybrid power control unit, a power chassis domain controller, a mobile data center, or a multi-domain controller.

14. A travel parameter allocation method, wherein the method comprises:
receiving first indication information from an intelligent control apparatus, wherein the first indication information indicates to prepare to process a travel parameter;
receiving a first travel parameter from the intelligent control apparatus; and
sending a second travel parameter to a motor, wherein the second travel parameter is obtained based on the first travel parameter.

15. The method according to claim 14, wherein before sending the second travel parameter to the motor, the method further comprises:
receiving first check information from the intelligent control apparatus, wherein the first check information is used to check whether preparation is completed; and
sending response information of the first check information to the intelligent control apparatus, wherein the response information indicates that preparation is completed.

16. The method according to claim 14 or 15, wherein before receiving the first indication information from the intelligent control apparatus, the method further comprises:
determining that handshake detection with the intelligent control apparatus is normal; or
determining that handshake detection with the intelligent control apparatus is abnormal, but handshake detection with the motor or a power apparatus is normal.

17. The method according to any one of claims 14 to 16, wherein the first travel parameter comprises at least one of the following: torque, vehicle speed, wheel speed, vehicle acceleration, motor phase angle, vehicle distance, or wheel track.

18. The method according to any one of claims 14 to 17, wherein the intelligent control apparatus is an autonomous driving system, an advanced assisted driving system, a multi-domain controller, a mobile data center, an autonomous driving control unit, or a high-performance computing center.

19. A vehicle-mounted device, wherein the vehicle-mounted device comprises a processing module and a transceiver module, wherein
the processing module is configured to obtain a travel parameter;
the processing module is further configured to determine a current driving scenario, wherein the current driving scenario comprises an intelligent driving scenario, an intelligent driving low-speed scenario, an intelligent driving non-low-speed scenario, a manual driving normal scenario, or a manual driving fault scenario; and
the transceiver module is configured to send the travel parameter to a motor or a vehicle control apparatus based on the current driving scenario.

20. The vehicle-mounted device according to claim 19, wherein the processing module is specifically configured to:
when detecting that an intelligent driving mode is enabled, determine that the current driving scenario comprises the intelligent driving scenario; or
when detecting that an intelligent driving mode is enabled and a vehicle speed is less than or equal to a first threshold, determine that the current driving scenario comprises the intelligent driving low-speed scenario; or
when detecting that an intelligent driving mode is enabled and a vehicle speed is greater than a first threshold, determine that the current driving scenario comprises the intelligent driving non-low-speed scenario; or
when handshake detection with the vehicle control apparatus is abnormal or communication with the vehicle control apparatus is interrupted, determine that the current driving scenario comprises the manual driving fault scenario.

21. The vehicle-mounted device according to claim 19 or 20, wherein the transceiver module is specifically configured to:
when the current driving scenario comprises the intelligent driving scenario, the intelligent driving low-speed scenario, or the manual driving fault scenario, send the travel parameter to the motor; or
when the current driving scenario comprises the intelligent driving non-low-speed scenario or the manual driving normal scenario, send the travel parameter to the vehicle control apparatus.

22. The vehicle-mounted device according to claim 21, wherein the transceiver module is specifically configured to:
when handshake detection with the vehicle control apparatus is normal, send the travel parameter to the vehicle control apparatus.

23. The vehicle-mounted device according to claim 21, wherein the transceiver module is specifically configured to:
when handshake detection with the vehicle control apparatus is abnormal, and handshake detection between the motor or a power apparatus and the vehicle control apparatus is normal, send the travel parameter to the vehicle control apparatus.

24. The vehicle-mounted device according to claim 23, wherein
the transceiver module is further configured to receive a detection result from the motor or the power apparatus, wherein the detection result indicates whether the handshake detection between the motor or the power apparatus and the vehicle control apparatus is normal.

25. The vehicle-mounted device according to any one of claims 21 to 24, wherein
the transceiver module is further configured to send first indication information to the vehicle control apparatus, wherein the first indication information indicates to prepare to process the travel parameter.

26. The vehicle-mounted device according to claim 25, wherein
the transceiver module is further configured to send first check information to the vehicle control apparatus, wherein the first check information is used to check whether preparation is completed; and
the transceiver module is further configured to receive response information of the first check information from the vehicle control apparatus, wherein the response information indicates that preparation is completed.

27. The vehicle-mounted device according to any one of claims 19 to 21, wherein the current driving scenario comprises the manual driving fault scenario, and the vehicle-mounted device has all or a part of functions of the vehicle control apparatus.

28. The vehicle-mounted device according to claim 27, wherein
the vehicle-mounted device is connected to a throttle signal and a braking signal, and the vehicle-mounted device has all the functions of the vehicle control apparatus; or
the vehicle-mounted device is not connected to a throttle signal and a braking signal, and the vehicle-mounted device has the part of the functions of the vehicle control apparatus.

29. The vehicle-mounted device according to any one of claims 19 to 21, wherein
the processing module is further configured to detect whether a collaborative processing function of the travel parameter is enabled; and
the transceiver module is further configured to: when the collaborative processing function is enabled, send second indication information to the motor, wherein the second indication information indicates to collaboratively process the travel parameter.

30. The vehicle-mounted device according to any one of claims 19 to 29, wherein the travel parameter comprises at least one of the following: torque, vehicle speed, wheel speed, vehicle acceleration, motor phase angle, vehicle distance, or wheel track.

31. The vehicle-mounted device according to any one of claims 19 to 30, wherein the vehicle control apparatus is a vehicle control unit, a vehicle control domain controller, a hybrid power control unit, a power chassis domain controller, a mobile data center, or a multi-domain controller.

32. A vehicle-mounted device, wherein the vehicle-mounted device comprises a transceiver module, wherein
the transceiver module is configured to receive first indication information from an intelligent control apparatus, wherein the first indication information indicates to prepare to process a travel parameter;
the transceiver module is further configured to receive a first travel parameter from the intelligent control apparatus; and
the transceiver module is further configured send a second travel parameter to a motor, wherein the second travel parameter is obtained based on the first travel parameter.

33. The vehicle-mounted device according to claim 32, wherein
the transceiver module is further configured to receive first check information from the intelligent control apparatus, wherein the first check information is used to check whether preparation is completed; and
the transceiver module is further configured to send response information of the first check information to the intelligent control apparatus, wherein the response information indicates that preparation is completed.

34. The vehicle-mounted device according to claim 32 or 33, wherein the vehicle-mounted device further comprises a processing module, wherein
the processing module is configured to determine that handshake detection with the intelligent control apparatus is normal; or
the processing module is configured to determine that handshake detection with the intelligent control apparatus is abnormal, but handshake detection with the motor or a power apparatus is normal.

35. The vehicle-mounted device according to any one of claims 32 to 34, wherein the first travel parameter comprises at least one of the following: torque, vehicle speed, wheel speed, vehicle acceleration, motor phase angle, vehicle distance, or wheel track.

36. The vehicle-mounted device according to any one of claims 32 to 35, wherein the intelligent control apparatus is an autonomous driving system, an advanced assisted driving system, a multi-domain controller, a mobile data center, an autonomous driving control unit, or a high-performance computing center.

37. A vehicle-mounted device, comprising a processor, wherein the processor is coupled to a memory, the memory is configured to store a program or instructions, and when the program or the instructions are executed by the processor, the vehicle-mounted device is enabled to perform the method according to any one of claims 1 to 13, or perform the method according to any one of claims 14 to 18.

38. A chip, comprising a processor, wherein the processor is coupled to a memory, the memory is configured to store a program or instructions, and when the program or the instructions are executed by the processor, the chip is enabled to perform the method according to any one of claims 1 to 13 or the method according to any one of claims 14 to 18.

39. A computer-readable storage medium, wherein the computer-readable storage medium stores a computer program or instructions, and when the computer program or the instructions are executed, a computer is enabled to perform the method according to any one of claims 1 to 13 or the method according to any one of claims 14 to 18.

40. A computer program product, wherein the computer program product comprises computer program code, and when the computer program code is run on a computer, the computer is enabled to implement the method according to any one of claims 1 to 13 or implement the method according to any one of claims 14 to 18.

41. An intelligent driving vehicle, comprising the vehicle-mounted device according to any one of claims 19 to 31, and/or the vehicle-mounted device according to any one of claims 32 to 36.
